(19) Europäisches Patentamt
European Patent Office
Office européen des brevets

(11) EP 0 882 782 A2

(12) EUROPEAN PATENT APPLICATION

(43) Date of publication:
09.12.1998 Bulletin 1998/50

(21) Application number: 98304477.7

(22) Date of filing: 05.06.1998

(51) Int Cl.6: C10M 159/12, C10M 133/56, C08F 8/00
// (C10M159/12, 129:32, 129:36, 129:76, 129:93, 129:95, 133:04, 143:00),
(C10N30/02, 70:00)

(84) Designated Contracting States:
AT BE CH CY DE DK ES FI FR GB GR IE IT LI LU MC NL PT SE
Designated Extension States:
AL LT LV MK RO SI

(30) Priority: 05.06.1997 US 48631 P
09.04.1998 US 57922

(71) Applicant: The Lubrizol Corporation
Wickliffe, Ohio 44092 (US)

(72) Inventors:
- Adams, Paul E.
  Willoughby Hills, Ohio 44094 (US)
- Lange, Richard M.
  Euclid, Ohio 44123 (US)
- Sivik, Matthew R.
  Parma, Ohio 44134 (US)

(74) Representative: Crisp, David Norman et al
D. YOUNG & CO.
21 New Fetter Lane
London EC4A 1DA (GB)

# (54) Nitrogen-containing dispersant-viscosity improvers for lubricating oils

(57) Dispersant viscosity improvers for lubricating oil compositions comprise reaction product of higher molecular weight olefinic reactants with carboxylic reactants of the formula $R^3C(O)(R^4)_nC(O)OR^5$ (IV) or the corresponding acetals, hemiacetals, ketals, and hemiketals thereof which is then reacted with at least one of ammonia, a hydrazine or an amine.

EP 0 882 782 A2

## Description

This invention relates to dispersant-viscosity improvers for lubricating oils and processes for preparing them.

The viscosity of lubricating oils, particularly the viscosity of mineral oil based lubricating oils, is generally dependent upon temperature. As the temperature of the oil is increased, the viscosity usually decreases.

The function of a viscosity improver is to reduce the extent of the decrease in viscosity as the temperature is raised or to reduce the extent of the increase in viscosity as the temperature is lowered, or both. Thus, a viscosity improver ameliorates the change of viscosity of an oil containing it with changes in temperature. The fluidity characteristics of the oil are improved.

Viscosity improvers are usually polymeric materials and are often referred to as viscosity index improvers.

Dispersants are also well-known in the lubricating art. Dispersants are employed in lubricants to keep impurities, particularly those formed during operation of mechanical devices such as internal combustion engines, automatic transmissions, etc. in suspension rather than allowing them to deposit as sludge or other deposits on the surfaces of lubricated parts.

Multifunctional additives that provide both viscosity improving properties and dispersant properties are likewise known in the art. Such products are described in numerous publications including Dieter Klamann, "Lubricants and Related Products", Verlag Chemie Gmbh (1984), pp 185-193; C. V. Smalheer and R. K. Smith "Lubricant Additives", Lezius-Hiles Co. (1967); M. W. Ranney, "Lubricant Additives", Noyes Data Corp. (1973), pp 92-145, M. W. Ranney, "Lubricant Additives, Recent Developments", Noyes Data Corp. (1978), pp 139-164; and M. W. Ranney, "Synthetic Oils and Additives for Lubricants", Noyes Data Corp. (1980), pp 96-166. Each of these publications is hereby expressly incorporated herein by reference.

Dispersant-viscosity improvers are generally prepared by functionalizing, i.e., adding polar groups, to a hydrocarbon polymer backbone.

Hayashi, et al, U.S. 4,670,173 relates to compositions suitable for use as dispersant-viscosity improvers made by reacting an acylating reaction product which is formed by reacting a hydrogenated block copolymer and an alpha, beta olefinically unsaturated reagent in the presence of free-radical initiators, then reacting the acylating product with a primary amine and optionally with a polyamine and a mono-functional acid.

Chung et al, US 5,035,821 relates to viscosity index improver-dispersants comprised of the reaction products of an ethylene copolymer grafted with ethylenically unsaturated carboxylic acid moieties. a polyamine having two or more primary amino groups or polyol and a high functionality long chain hydrocarbyl substituted dicarboxylic acid or anhydride.

Van Zon et al, U.S. 5,049,294, relates to dispersant/VI improvers produced by reacting an alpha,beta-unsaturated carboxylic acid with a selectively hydrogenated star-shaped polymer then reacting the product so formed with a long chain alkane-substituted carboxylic acid and with a $C_1$ to $C_{18}$ amine containing 1 to 8 nitrogen atoms and/or with an alkane polyol having at least two hydroxy groups or with the preformed product thereof.

Bloch et al, U.S. 4,517,104, relates to oil soluble viscosity improving ethylene copolymers reacted or grafted with ethylenically unsaturated carboxylic acid moieties then with polyamines having two or more primary amine groups and a carboxylic acid component or the preformed reaction product thereof.

Gutierrez et al, U.S. 4,632,769, describes oil-soluble viscosity improving ethylene copolymers reacted or grafted with ethylenically unsaturated carboxylic acid moieties and reacted with polyamines having two or more primary amine groups and a $C_{22}$ to $C_{28}$ olefin carboxylic acid component.

Lange, et al, U.S. 5,512,192 teach dispersant viscosity improvers for lubricating oil compositions comprising a vinyl substituted aromatic-aliphatic conjugated diene block copolymer grafted with an ethylenically unsaturated carboxylic acid reacted with at least one polyester containing at least one condensable hydroxy group and at least one polyamine having at least one condensable primary or secondary amino group, and optionally, at least one hydrocarbyl substituted carboxylic acid or anhydride.

Lange, U.S. 5,540,851 describes dispersant viscosity improvers for lubricating oil compositions which are the reaction product of (a) an oil soluble ethylene-alpha olefin copolymer wherein the alpha olefin is selected from the group consisting of $C_{3}$-$_{28}$ alpha olefins, said polymer having a number average molecular weight ranging from about 30,000 to about 300,000 grafted with an ethylenically unsaturated carboxylic acid or functional derivative thereof; with at least one polyester containing at least one condensable hydroxyl group, and at least one polyamine having at least one condensable primary or secondary amino group, and optionally at least one hydrocarbyl substituted carboxylic acid or anhydride.

Each of these patents is hereby expressly incorporated herein by reference.

For additional disclosures concerning multi-purpose additives and particularly viscosity improvers and dispersants, the disclosures of the following United States patents are incorporated herein by reference:

| | | |
|---|---|---|
| 2,973,344 | 3,488,049 | 3,799,877 |
| 3,278,550 | 3,513,095 | 3,842,010 |
| 3,311,558 | 3,563,960 | 3,864,098 |
| 3,312,619 | 3,598,738 | 3,864,268 |
| 3,326,804 | 3,615,288 | 3,879,304 |
| 3,403,011 | 3,637,610 | 4,033,889 |
| 3,404,091 | 3,652,239 | 4,051,048 |
| 3,445,389 | 3,687,849 | 4,234,435 |

Many such additives are frequently derived from carboxylic reactants, for example, acids, esters, anhydrides, lactones, and others. Specific examples of commonly used carboxylic compounds used as intermediates for preparing lubricating oil additives include alkyl-and alkenyl substituted succinic acids and anhydrides, polyolefin substituted carboxylic acids, aromatic acids, such as salicylic acids, and others. Illustrative carboxylic compounds are described in Meinhardt, et al, US 4,234,435; Norman et al, US 3,172,892; LeSuer et al, US 3,454,607, and Rense, US 3,215,707.

Many carboxylic intermediates used in the preparation of lubricating oil additives contain chlorine. While the amount of chlorine present is often only a very small amount of the total weight of the intermediate, the chlorine frequently is carried over into the carboxylic derivative which is desired as an additive. For a variety of reasons, including environmental reasons, the industry has been making efforts to reduce or to eliminate chlorine from additives designed for use as lubricant or fuel additives.

Accordingly, it is desirable to provide low chlorine or chlorine free derivatives for use as additives in lubricants, and to provide processes for preparing such additives.

According to the present invention a composition of matter suitable for use as a dispersant-viscosity improver for lubricating oil compositions comprises the reaction product of reactants comprising:

(A) at least one olefinically unsaturated hydrocarbon polymer having $\overline{M}_n$ ranging from about 20,000 to about 500,000, when the polymer is not a star polymer, and up to about GPC peak molecular weight of 4,000,000 when the polymer is a star polymer, with

(B) at least one carboxylic reactant selected from the group consisting of compounds ofthe formula

$$R^3C(O)(R^4)_nC(O)OR^5 \qquad (IV)$$

wherein each of $R^3$ and $R^5$ is independently H or a hydrocarbyl group, $R^4$ is a divalent hydrocarbylene group, and n is 0 or 1, and reactive sources thereof; wherein (A) and (B) are first reacted to form an intermediate, then reacting said intermediate with

(C) at least one of ammonia or a hydrazine or an amine characterized by the presence within its structure of at least one condensable H—N group and optionally,

(D) at least one of a hydrocarbyl substituted carboxylic acid, lactone, anhydride, and ester thereof.

Various preferred features and embodiments of the invention will be described below by way of non-limiting illustration.

As used herein, the terms "hydrocarbon", "hydrocarbyl" or "hydrocarbon based" mean that the group being described has predominantly hydrocarbon character within the context of this invention. These include groups that are purely hydrocarbon in nature, that is, they contain only carbon and hydrogen. They may also include groups containing substituents or atoms which do not alter the predominantly hydrocarbon character of the group. Such substituents may include halo-, alkoxy-, nitro-, etc. These groups also may contain hetero atoms. Suitable hetero atoms will be apparent to those skilled in the art and include, for example, sulfur, nitrogen and oxygen. Therefore, while remaining predominantly hydrocarbon in character within the context ofthis invention, these groups may contain atoms other than carbon present in a chain or ring otherwise composed of carbon atoms provided that they do not adversely affect reactivity or utility ofthe process or products of this invention..

In general, no more than about three non-hydrocarbon substituents or hetero atoms, and preferably no more than one, will be present for every 10 carbon atoms in the hydrocarbon or hydrocarbon based groups. Most preferably, the groups are purely hydrocarbon in nature, that is, they are essentially free of atoms other than carbon and hydrogen.

The expression viscosity index (often abbreviated VI), is frequently used herein. Viscosity index is an empirical number indicating the degree of change in viscosity within a given temperature range. A high VI signifies an oil that displays a relatively small change in viscosity with temperature.

Throughout the specification and claims the expression oil soluble or dispersible is used. By oil soluble or dispersible is meant that an amount needed to provide the desired level of activity or performance can be incorporated by being dissolved, dispersed or suspended in an oil of lubricating viscosity. Usually, this means that at least about 0.001% by weight of the material can be incorporated into a lubricating oil. For a further discussion of the terms oil soluble and dispersible, particularly "stably dispersible", see U.S. Patent 4,320,019 which is expressly incorporated herein by reference for relevant teachings in this regard.

The expression "lower" is used throughout the specification and claims. As used herein to describe various groups, the expression "lower" is intended, unless expressly indicated otherwise, to mean groups containing no more than 7 carbon atoms, more often, no more than 4, frequently one or two carbon atoms.

(A) The Olefinically Unsaturated Hydrocarbon Polymer

As used herein, the expression 'polymer' refers to polymers of all types, i.e., homopolymers and copolymers. The term homopolymer refers to polymers derived from essentially one monomeric species; copolymers are defined herein as being derived from 2 or more monomeric species.

The hydrocarbon polymer is an essentially hydrocarbon based polymer, usually one having a number average molecular weight ($\overline{M}_n$) between about 20,000 and about 500,000. often from about 20,000 to about 300,000. Molecular weights of the hydrocarbon polymer are determined using well known methods described in the literature. Examples of procedures for determining the molecular weights are gel permeation chromatography (GPC) (also known as size-exclusion chromatography) and vapor phase osmometry (VPO). These and other procedures are described in numerous publications including:

P.J. Flory, "Principles of Polymer Chemistry", Cornell University Press (1953), Chapter VII, pp 266-316,
"Macromolecules, an Introduction to Polymer Science", F.A. Bovey and F.H. Winslow, Editors, Academic Press (1979), pp 296-312, and
W.W. Yau, J.J. Kirkland and D.D. Bly, "Modern Size Exclusion Liquid Chromatography", John Wiley and Sons, New York, 1979.

Unless otherwise indicated, GPC molecular weights referred to herein are polystyrene equivalent weights, i.e., are molecular weights determined employing polystyrene standards.

A measurement which is complementary to a polymer's molecular weight is the melt index (ASTM D-1238). Polymers of high melt index generally have low molecular weight, and vice versa. The polymers of the present invention preferably have a melt index of up to 20 dg/min., more preferably 0.1 to 10 dg/min.

These publications are hereby incorporated by reference for relevant disclosures contained therein relating to the determination of molecular weight.

When the molecular weight of a polymer is greater than desired, it may be reduced by techniques known in the art. Such techniques include mechanical shearing of the polymer employing masticators, ball mills, roll mills, extruders and the like. Oxidative or thermal shearing or degrading techniques are also useful and are known. Details of numerous procedures for shearing polymers are given in U.S. 5,348,673 which is hereby incorporated herein by reference for relevant disclosures in this regard. Reducing molecular weight also tends to improve the subsequent shear stability of the polymer.

The polymer may contain aliphatic, aromatic or cycloaliphatic components, or mixtures thereof. When the polymer is prepared from the monomers, it may contain substantial amounts of olefinic unsaturation, oftentimes far in excess of that which is desired for this invention. The polymer may be subjected to hydrogenation to reduce the amount of unsaturation to such an extent that the resulting hydrogenated polymer has olefinic unsaturation, based on the total number of carbon to carbon bonds in the polymer, of less than 5%, frequently less than 2%, often no more than 1% olefinic unsaturation. As noted hereinabove, the hydrocarbon polymer is olefinically unsaturated. Accordingly, the polymer contains one or more olefinic double bonds. When the polymer is subjected to hydrogenation, it is not exhaustively hydrogenated.

Typically, from about 90 to about 99.9% of carbon to carbon bonds in the polymer are saturated.

Aromatic unsaturation is not considered olefinic unsaturation within the context of this invention. Depending on hydrogenation conditions, up to about 20% of aromatic groups may be hydrogenated; however, typically no more than about 5%, usually less than 1% of aromatic bonds are hydrogenated. Most often, substantially none of the aromatic bonds are hydrogenated.

Typically, (A) the olefinically unsaturated polymer contains an average of from 1 to about 9000 olefinic double bonds, more often from about 1 to about 100 olefinic double bonds, even more often from about 1, frequently 2 to about 10, up to about 50 olefinic double bonds per molecule based on the $\overline{M}_n$ of the polymer. In another embodiment, (A) contains about 1 olefinic double bond for about every 20, often for about every 70 to 7000 carbon atoms. In still

another embodiment, the hydrocarbon polymer (A) contains about I mole of olefinic double bonds for every 4,000 to 20,000 atomic mass units on $\overline{M}_n$ basis, often, about 1 mole of olefinic double bonds per 1,000 to 40,000 atomic mass units on $\overline{M}_n$ basis. Thus, for example, in this embodiment a polymer of $\overline{M}_n$ = 80,000 would contain from about 2 to about 80 olefinic double bonds per molecule, often from about 4 to about 20 double bonds per molecule. In yet another embodiment, the hydrocarbon polymer (A) contains about 1 mole of olefinic double bond for about every 300 to 100,000 atomic mass units on $\overline{M}_n$ basis. One mole of olefinic double bonds is an Avogadros number of carbon to carbon double bonds.

In preferred embodiments, the hydrocarbon polymer is at least one oil soluble or dispersible homopolymer or copolymer selected from the group consisting of:

(1) polymers of dienes;
(2) copolymers of conjugated dienes with vinyl substituted aromatic compounds;
(3) polymers of olefins, especially alpha-olefins having from 2 to about 28 carbon atoms;
(4) olefin-diene copolymers; and
(5) star polymers.

These preferred polymers are described in greater detail hereinbelow.

<u>(1) Polymers of Dienes</u>

The hydrocarbon polymer may be a homopolymer or copolymer of one or more dienes. The dienes may be conjugated such as isoprene. butadiene and piperylene or non-conjugated such as 1-4 hexadiene, ethylidene norbornene, vinyl norbornene, 4-vinyl cyclohexene, and dicyclopentadiene. Polymers of conjugated dienes are preferred. Such polymers are conveniently prepared via free radical and anionic polymerization techniques. Emulsion techniques are commonly employed for free radical polymerization.

As noted hereinabove, useful polymers have $\overline{M}_n$ ranging from about 20,000 to about 500,000. More often, useful polymers of this type have $\overline{M}_n$ ranging from about 50,000 to about 150,000.

These polymers may be and often are hydrogenated to reduce the amount of olefinic unsaturation present in the polymer. They are not exhaustively hydrogenated.

Hydrogenation is often accomplished employing catalytic methods. Catalytic techniques employing hydrogen under high pressure and at elevated temperature are well-known to those skilled in the chemical art. Other methods are also useful and are well known to those skilled in the art.

Extensive discussions of diene polymers appear in the "Encyclopedia of Polymer Science and Engineering", Volume 2, pp 550-586 and Volume 8. pp 499-532, Wiley-Interscience (1986), which are hereby expressly incorporated herein by reference for relevant disclosures in this regard.

The polymers include homopolymers and copolymers of conjugated dienes including polymers of 1,3-dienes of the formula

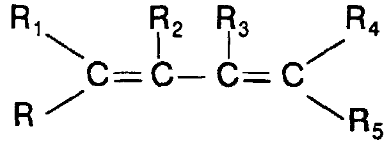

wherein each substituent denoted by R, or R with a numerical subscript, is independently hydrogen or hydrocarbon based, wherein hydrocarbon based is as defined hereinabove. Preferably at least one substituent is H. Normally, the total carbon content of the diene will not exceed 20 carbons. Preferred dienes for preparation of the polymer are piperylene, isoprene, 2,3-dimethyl-1,3-butadiene, chloroprene and 1,3-butadiene.

Suitable homopolymers of conjugated dienes are described, and methods for their preparation are given in numerous U.S. patents, including the following:

3,547,821
3,835,053
3,959,161
3,965,019

(continued)

4,085,055
4,116,917

As a specific example, U.S. 3,959,161 teaches the preparation of hydrogenated polybutadiene. In another example, upon hydrogenation, 1,4-polyisoprene becomes an alternating copolymer of ethylene and propylene.

Copolymers of conjugated dienes are prepared from two or more conjugated dienes. Useful dienes are the same as those described in the preparation of homopolymers of conjugated dienes hereinabove. The following U.S. Patents describe diene copolymers and methods for preparing them:

3,965,019
4,073,737
4,085,055
4,116,917

For example, U.S. Patent 4,073,737 describes the preparation and hydrogenation of butadiene-isoprene copolymers.

(2) Copolymers of Conjugated Dienes with Vinyl Substituted Aromatic Compounds

In one embodiment, the hydrocarbon polymer is a copolymer of a vinyl-substituted aromatic compound and a conjugated diene. The vinyl substituted aromatics generally contain from 8 to about 20 carbons, preferably from 8 to 12 carbon atoms and most preferably, 8 or 9 carbon atoms.

Examples of vinyl substituted aromatics include vinyl anthracenes, vinyl naphthalenes and vinyl benzenes (styrenic compounds). Styrenic compounds are preferred, examples being styrene, alpha-methystyrene, ortho-methyl styrene, meta-methyl styrene, para-methyl styrene, para-tertiary-butylstyrene, with styrene being preferred.

The conjugated dienes generally have from 4 to about 10 carbon atoms and preferably from 4 to 6 carbon atoms. Example of conjugated dienes include piperylene, 2,3-dimethyl-1,3-butadiene, chloroprene, isoprene and 1,3-butadiene, with isoprene and 1,3-butadiene being particularly preferred. Mixtures of such conjugated dienes are useful.

The vinyl substituted aromatic content of these copolymers is typically in the range of about 20% to about 70% by weight, preferably about 40% to about 60% by weight. The aliphatic conjugated diene content of these copolymers is typically in the range of about 30% to about 80% by weight, preferably about 40% to about 60% by weight.

The polymers, and in particular, styrene-diene copolymers, can be random copolymers or block copolymers. which include regular block copolymers or random block copolymers. Random copolymers are those in which the comonomers are randomly, or nearly randomly, arranged in the polymer chain with no significant blocking of homopolymer of either monomer. Regular block copolymers are those in which a small number of relatively long chains of homopolymer of one type of monomer are alternately joined to a small number of relatively long chains of homopolymer of another type of monomer. Random block copolymers are those in which a larger number of relatively short segments of homopolymer of one type of monomer alternate with relatively short segments of homopolymer of another monomer.

The random, regular block and random block polymers used in this invention may be linear, or they may be partially or highly branched. The relative arrangement of homopolymer segments in a linear regular block or random block polymer is obvious. Differences in structure lie in the number and relative sizes of the homopolymer segments; the arrangement in a linear block polymer of either type is always alternating in homopolymer segments.

Normal or regular block copolymers usually have from 1 to about 5, often 1 to about 3, preferably only from 1 to about 2 relatively large homopolymer blocks of each monomer. Thus, a linear regular diblock copolymer of styrene or other vinyl aromatic monomer (A) and diene (B) would have a general structure represented by a large block of homopolymer (A) attached to a large block of homopolymer (B), as:

$$(A)_a(B)_b$$

where a and b are as described hereinbelow. Techniques vary for the preparation of these "A-B-A" and "B-A-B" triblock polymers, and are described in the literature for anionic polymerization.

Similarly, a regular linear tri-block copolymer of styrene or other vinyl aromatic monomer (A) and diene monomer (B) may be represented, for example, by

$$(A)_a(B)_b(C)_c.$$

The third monomer (C) may be incorporated into linear, regular block copolymers. Several configurations are possible depending on how the homopolymer segments are arranged with respect to each other. For example, linear triblock copolymers of monomers (A), (B) and (C) can be represented by the general configurations:

$$(A)_a\text{-}(B)_b\text{-}(C)_c,\ (A)_a\text{-}(C)_c\text{-}(B)_b,\ \text{or}\ (B)_b\text{-}(A)_a\text{-}(C)_c,$$

wherein the lower case letters a, b and c represent the approximate number of monomer units in the indicated block.

The sizes of the blocks are not necessarily the same, but may vary considerably. The only stipulation is that any regular block copolymer comprises relatively few, but relatively large, alternating homopolymer segments.

As an example, when (A) represents blocks derived from diene such as isoprene or butadiene, "a" usually ranges from about 100 to about 2000, preferably from about 500 to about 1500; when (B) represents, for example, blocks derived from styrene, "b" usually ranges from about 100 to about 2000, preferably from about 200 to about 1000; and when a third block (C) is present, "c" usually ranges from about 10 to about 1000, provided that the $\overline{M}_n$ of the polymer is within the ranges indicated as useful for this invention.

The copolymers can be prepared by methods well known in the art. Such copolymers usually are prepared by anionic polymerization using Group Ia metals in the presence of electron-acceptor aromatics, or preformed organometallics such as sec-butyllithium as polymerization catalysts.

The styrene/diene block polymers are usually made by anionic polymerization, using a variety of techniques, and altering reaction conditions to produce the most desirable features in the resulting polymer. In an anionic polymerization, the initiator can be either an organometallic material such as an alkyl lithium, or the anion formed by electron transfer from a Group Ia metal to an aromatic material such as naphthalene. A preferred organometallic material is an alkyl lithium such as sec-butyl lithium; the polymerization is initiated by addition of the butyl anion to either the diene monomer or to the styrene.

When an alkyl lithium initiator is used. a homopolymer of one monomer. e.g.. styrene, can be selectively prepared, with each polymer molecule having an anionic terminus. and lithium gegenion. The carbanionic terminus remains an active initiation site toward additional monomers. The resulting polymers, when monomer is completely depleted, will usually all be of similar molecular weight and composition. and the polymer product will be "monodisperse" (i.e., the ratio of weight average molecular weight to number average molecular weight is very nearly 1.0). At this point. addition of 1,3-butadiene, isoprene or other suitable anionically polymerizable monomer to the homopolystyrene-lithium "living" polymer produces a second segment which grows from the terminal anion site to produce a living diblock polymer having an anionic terminus, with lithium gegenion.

Subsequent introduction of additional styrene can produce a new poly A-block-poly B-block-poly A, or A-B-A triblock polymer: higher orders of block polymers can be made by consecutive stepwise additions of different monomers in different sequences.

Alternatively, a living diblock polymer can be coupled by exposure to an agent such as a dialkyl dichlorosilane. When the carbanionic "heads" of two A-B diblock living polymers are coupled using such an agent, precipitation of LiCl occurs to give an A-B-A triblock polymer.

Block copolymers made by consecutive addition of styrene to give a relatively large homopolymer segment (A), followed by a diene to give a relatively large homopolymer segment (B), are referred to as poly-A-*block*-poly-B copolymers, or A-B diblock polymers.

When metal naphthalide is employed as initiator, the dianion formed by electron transfer from metal, e.g., Na, atoms to the naphthalene ring can generate dianions which may initiate polymerization, e.g. of monomer A, in two directions simultaneously, producing essentially a homopolymer of A having anionic termini at both ends.

Subsequent exposure of the poly (A) dianion to a second monomer (B) results in formation of a poly B-block-polyA-block-polyB. or a B-A-B triblock polymeric dianion. which may continue to interact with additional anionically-polymerizable monomers of the same, or different chemical type, in the formation of higher order block polymers. Ordinary block copolymers are generally considered to have up to about 5 such blocks.

In a mixture of monomers, usually one monomer or another will polymerize faster, leading to a segment that is richer in that monomer, interrupted by occasional incorporation of the other monomer. This can be used to build a type of polymer referred to as a "random block polymer", or "tapered block polymer". When a mixture of two different monomers is anionically polymerized in a non-polar paraffinic solvent, one will initiate selectively, and usually polymerize to produce a relatively short segment of homopolymer. Incorporation of the second monomer is inevitable, and this produces a short segment of different structure. Incorporation of the first monomer type then produces another short segment of that homopolymer, and the process continues, to give a "random" alternating distribution of relatively short

segments of homopolymers, of different lengths. Random block polymers are generally considered to be those comprising more than 5 such blocks. At some point, one monomer will become depleted, favoring incorporation of the other, leading to ever longer blocks of homopolymer, resulting in a "tapered block copolymer."

An alternative way of preparing random or tapered block copolymers involves initiation of styrene, and interrupting with periodic, or step. additions of diene monomer. The additions are programmed according to the relative reactivity ratios and rate constants of the styrene and particular diene monomer.

"Promoters" are electron-rich molecules that facilitate anionic initiation and polymerization rates while lessening the relative differences in rates between various monomers. Promoters also influence the way in which diene monomers are incorporated into the block polymer, favoring 1,2-polymerization of dienes over the normal 1,4-cis- addition.

Hydrogenation of the unsaturated block polymers initially obtained produces polymers having reduced levels of olefinic unsaturation. Hydrogenation techniques are well known to those of skill in the art. One common method is to contact the copolymers with hydrogen. often at superatmospheric pressure in the presence of a metal catalyst such as colloidal nickel, palladium supported on charcoal, etc. Hydrogenation may be carried out as part of the overall production process, using finely divided, or supported, nickel catalyst. Other transition metals may also be used to effect the transformation. Other techniques are known in the art.

These polymers may have considerable olefinic unsaturation. which may be reduced, if desired. Hydrogenation to reduce the extent of olefinic unsaturation may be carried out to reduce approximately 90-99.1% of the olefinic unsaturation of the initial polymer, such that from about 90 to about 99.9% of the carbon to carbon bonds of the polymer are saturated. In general, it is preferred that these copolymers contain no more than about 10%, preferably no more than 5% and often no more than about 0.5% residual olefinic unsaturation on the basis of the total amount of olefinic double bonds present in the polymer prior to hydrogenation. As noted above. the polymers are olefinically unsaturated; accordingly, the polymers are not exhaustively hydrogenated. Unsaturation can be measured by a number of means well known to those of skill in the art, including infrared spectroscopy, nuclear magnetic resonance spectroscopy, bromine number, iodine number, and other means well known to those skilled in the art. Aromatic unsaturation is not considered to be olefinic unsaturation within the context of this invention.

Other polymerization techniques such as emulsion polymerization can be used.

Often the arrangement of the various homopolymer blocks is dictated by the reaction conditions such as catalyst and polymerization characteristics of the monomers employed. Conditions for modifying arrangement of polymer blocks are well known to those of skill in the polymer art. Literature references relating to polymerization techniques and methods for preparing certain types of block polymers include:

1) "Encyclopedia of Polymer Science and Engineering", Wiley-Interscience Publishing, New York, (1986);
2) A. Noshay and J.E. McGrath, "Block Copolymers", Academic Press. New York, (1977);
3) R.J. Ceresa, ed.. "Block and Graft Copolymerization", John Wiley and Sons, New York, (1976); and
4) D.J. Meier, ed., (Block Copolymers", MMI Press, Harwood Academic Publishers, New York, (1979).

Each of these is hereby incorporated herein by reference for relevant disclosures relating to block copolymers.

The copolymers preferably have $\overline{M}_n$ in the range of about 20,000 to about 500,000 more preferably from about 30,000 to about 150,000. The weight average molecular weight ($\overline{M}_w$) for these copolymers is generally in the range of about 50,000 to about 500,000, preferably from about 50,000 to about 300,000.

Copolymers of conjugated dienes with olefins containing aromatic groups. e.g., styrene, methyl styrene, etc. are described in numerous patents including the following:

| | |
|---|---|
| 3,554,911 | 4,082,680 |
| 3,992,310 | 4,085,055 |
| 3,994,815 | 4,116,917 |
| 4,031,020 | 4,136,048 |
| 4,073,738 | 4,145,298 |
| 4,077,893 | |

For example. U.S. Patent 3,554,911 describes a random butadienestyrene copolymer, its preparation and hydrogenation.

(3) Polymers of Olefins

Another useful hydrocarbon polymer is one which in its main chain is composed essentially of aliphatic olefin, especially alpha olefin, monomers. The polyolefins of this embodiment thus exclude polymers which have a large

component of other types of monomers copolymerized in the main polymer backbone. such as ester monomers, acid monomers, and the like. The polyolefin may contain impurity amounts of such materials, e.g.. less than 5% by weight, more often less than 1% by weight. preferably, less than 0.1% by weight of other monomers. Useful polymers include oil soluble or dispersible polymers of alpha-olefins..

The olefin copolymer preferably has a number average molecular weight ($\overline{M}_n$) determined by gel-permeation chromatography employing polystyrene standards, ranging from about 20.000 to about 500,000, often from about 30.000 to about 300,000, often to about 200,000, more often from about 50,000 to about 150,000, even more often from about 80,000 to about 150.000. Exemplary polydispersity values ($\overline{M}_w/\overline{M}_n$) range from about 1.5 to about 3.5, often to about 3.0. preferably, from about 1.7, often from about 2.0, to about 2.5.

These polymers are preferably polymers of alpha-olefins having from 2 to about 28 carbon atoms. Preferably they are copolymers, more preferably copolymers of ethylene and at least one other α-olefin having from 3 to about 28 carbon atoms. i.e., one of the formula $CH_2 = CHR_1$ wherein $R_1$ is straight chain or branched chain alkyl radical comprising 1 to 26 carbon atoms. Examples include monoolefins such as propylene, 1-butene, isobutene, 1-pentene, 1-hexene, 1-heptene, 1-octene, 1-nonene, 1-decene, etc. Preferably $R_1$ in the above formula is alkyl of from 1 to 8 carbon atoms, and more preferably is alkyl of from 1 to 2 carbon atoms. Preferably, the polymer of olefins is an ethylene-propylene copolymer.

The ethylene content is preferably in the range of 20 to 80 percent by weight, and more preferably 30 to 70 percent by weight. When propylene and/or 1-butene are employed as comonomer(s) with ethylene, the ethylene content of such copolymers is most preferably 45 to 65 percent, although higher or lower ethylene contents may be present. Most preferably, these polymers are substantially free of ethylene homopolymer, although they may exhibit a degree of crystallinity due to the presence of small crystalline polyethylene segments within their microstructure.

In one particular embodiment, the polymer is a homopolymer derived from a butene, particularly, isobutylene. Especially preferred is where the polymer comprises terminal vinylidene olefinic double bonds.

The polymers employed in this embodiment may generally be prepared substantially in accordance with procedures which are well known in the art.

Catalysts employed in the production of the reactant polymers are likewise well known. One broad class of catalysts particularly suitable for polymerization of α-olefins, comprises coordination catalysts such as Ziegler or Ziegler-Natta catalysts comprising a transition metal atom. Ziegler-Natta catalysts are composed of a combination of a transition metal atom with an organo aluminum halide and may be used with additional complexing agents.

Other useful polymerization catalysts are the metallocene compounds. These are organometallic coordination compounds obtained as cyclopentadienyl derivatives of a transition metal or metal halide. The metal is bonded to the cyclopentadienyl ring by electrons moving in orbitals extending above and below the plane of the ring (π bond). The use of such materials as catalysts for the preparation of ethylene-alpha olefin copolymers is described in U.S Patent 5,446,221. The procedure described therein provides ethylene-alpha olefin copolymers having at least 30% of terminal ethenylidene unsaturation. This patent is hereby incorporated herein by reference for relevant disclosures.

Polymerization using coordination catalysis is generally conducted at temperatures ranging between 20° and 300° C, preferably between 30° and 200°C. Reaction time is not critical and may vary from several hours or more to several minutes or less, depending upon factors such as reaction temperature, the monomers to be copolymerized, and the like. One of ordinary skill in the art may readily obtain the optimum reaction time for a given set of reaction parameters by routine experimentation. Preferably, the polymerization will generally be completed at a pressure of 1 to 40 MPa (10 to 400 bar).

The polymerization may be conducted employing liquid monomer. such as liquid propylene, or mixtures of liquid monomers (such as mixtures of liquid propylene and 1-butene), as the reaction medium. Alternatively, polymerization may be accomplished in the presence of a hydrocarbon inert to the polymerization such as butane, pentane, isopentane, hexane, isooctane, decane, toluene, xylene, and the like.

When carrying out the polymerization in a batch-type fashion, the reaction diluent (if any) and the alpha-olefin comonomer(s) are charged at appropriate ratios to a suitable reactor. Care should be taken that all ingredients are dry, with the reactants typically being passed through molecular sieves or other drying means prior to their introduction into the reactor. Subsequently. component(s) of the catalyst are introduced while agitating the reaction mixture, thereby causing polymerization to commence. Alternatively, component(s) of the catalyst may be premixed in a solvent and then fed to the reactor. As polymer is being formed. additional monomers may be added to the reactor. Upon completion of the reaction, unreacted monomer and solvent are either flashed or distilled off. if necessary by vacuum. and the copolymer withdrawn from the reactor.

The polymerization may be conducted in a continuous manner by simultaneously feeding the reaction diluent (if employed), monomers, component(s) of the catalyst to a reactor and withdrawing solvent, unreacted monomer and polymer from the reactor so as to allow a residence time of ingredients long enough for forming polymer of the desired molecular weight; and separating the polymer from the reaction mixture.

In those situations wherein the molecular weight of the polymer product that would be produced at a given set of

operating conditions is higher than desired, any of the techniques known in the prior art for control of molecular weight, such as polymerization temperature control, may be used.

The polymers are preferably formed in the substantial absence of added $H_2$ gas, that is $H_2$ gas added in amounts effective to substantially reduce the polymer molecular weight.

The polymers can be random copolymers, block copolymers, and random block copolymers. Ethylene propylene copolymers are usually random copolymers. Block copolymers may be obtained by conducting the reaction in a tubular reactor. Such a procedure is described in U.S. 4,804,794 which is hereby incorporated by reference for relevant disclosures in this regard.

Numerous United States patents, including the following, describe the preparation of copolymers of alpha olefins.

| | |
|---|---|
| 3,513,096 | 4,068,057 |
| 3,551,336 | 4,081,391 |
| 3,562,160 | 4,089,794 |
| 3,607,749 | 4,098,710 |
| 3,634,249 | 4,113,636 |
| 3,637,503 | 4,132,661 |
| 3,992,310 | 4,137,185 |
| 4,031,020 | 4,138,370 |
| 4,068,056 | 4,144,181 |

Copolymers of ethylene with higher alpha olefins are the most common copolymers of aliphatic olefins. Ethylene-propylene copolymers are the most common ethylene-alpha-olefin copolymers and are preferred for use in this invention. A description of an ethylene-propylene copolymer appears in U.S. 4,137,185 which is hereby incorporated herein by reference.

Useful ethylene-alpha olefin, usually ethylene-propylene, copolymers are commercially available from numerous sources including the Exxon, Texaco and Lubrizol Corporations.

(4) Olefin-Diene Copolymers

Another useful hydrocarbon polymer is one derived from olefins, especially lower olefins. and dienes. Preferred olefins are alpha olefins. Dienes may be non-conjugated or conjugated, usually non-conjugated. Useful olefins and dienes are the same as those described hereinabove and hereinafter in discussions of other polymer types.

In one embodiment. the copolymer is an ethylene-lower olefin-diene copolymer. As used herein, the term lower refers to groups or compounds containing no more than 7 carbon atoms. Preferably, the diene is non-conjugated. Especially preferred are ethylene-propylene-diene copolymers.

These copolymers most often will have $\overline{M}_n$ ranging from about 20,000 to about 500,000, preferably from about 50,000 to about 200,000. In another embodiment. the $\overline{M}_n$ ranges from about 70,000 to about 350,000. These polymers often have a relatively narrow range of molecular weight as represented by the polydispersity value $\overline{M}_w/\overline{M}_n$. Typically the polydispersity values are less than 10, more often less than 6, and preferably less than 4, often between and 3.

There are numerous commercial sources for lower olefin-diene copolymers. For example, Ortholeum® 2052 (a product marketed by the DuPont Company) which is a terpolymer having an ethylene:propylene weight ratio of about 57:43 and containing 4-5 weight % of groups derived from 1,4-hexadiene monomer. Other commercially available olefin-diene copolymers including ethylene-propylene copolymers with ethylidene norbornene. with dicyclopentadiene, with vinyl norbornene. with 4-vinyl cyclohexene. and numerous other such materials are readily available. Olefin-diene copolymers and methods for their preparation are described in numerous patents including the following U.S. Patents:

3,291,780
3,300,459
3,598,738
4,026,809
4,032,700
4,156,061
3,320,019
4,357,250

U.S. Patent 3,598,738, which describes the preparation of ethylene-propylene-1,4-hexadiene terpolymers, is illustrative. This patent also lists numerous references describing the use of various polymerization catalysts.

Another useful polymer is an olefin-conjugated diene copolymer. An example of such a polymer is butyl rubber, an isobutylene-isoprene copolymer.

Details of various types of polymers, reaction conditions, physical properties, and the like are provided in the above patents and in numerous books, including:

"Riegel's Handbook of Industrial Chemistry", 7th edition, James A. Kent Ed., Van Nostrand Reinhold Co., New York (1974), Chapters 9 and 10,

P.J. Flory, "Principles of Polymer Chemistry", Cornell University Press, Ithaca, N.Y. (1953),

"Kirk-Othmer Encyclopedia of Chemical Technology", 3rd edition, Vol. 8 (Elastomers, Synthetic, and various subheadings thereunder), John Wiley and Sons, New York (1979).

Each of the above-mentioned books and patents is hereby expressly incorporated herein by reference for relevant disclosures contained therein.

Polymerization can also be effected using free radical initiators in a well-known process, generally employing higher pressures than used with coordination catalysts. These polymers may be and frequently are hydrogenated to bring unsaturation to desired levels. As noted, hydrogenation may take place before or after reaction with the carboxylic reactant.

(5) Star Polymer

Star polymers are polymers comprising a nucleus and polymeric arms. Common nuclei include polyalkenyl compounds, usually compounds having at least two non-conjugated alkenyl groups, usually groups attached to electron withdrawing groups, e.g., aromatic nuclei. The polymeric arms are often homopolymers and copolymers of dienes, preferably conjugated dienes, vinyl substituted aromatic compounds such as monoalkenyl arenes, homopolymers of olefins such as butenes, especially isobutene, and mixtures thereof.

Molecular weights (GPC peak) of useful star polymers range from about 20,000 to about 4 million. They frequently have $\overline{M}_n$ ranging from about 100,000 to about million.

The polymers thus comprise a poly(polyalkenyl coupling agent) nucleus with polymeric arms extending outward therefrom. The star polymers are usually hydrogenated such that at least 80% of the olefinic carbon-carbon bonds are saturated, more often at least 90% and even more preferably, at least 95% are saturated. As noted herein, the polymers contain olefinic unsaturation; accordingly, they are not exhaustively saturated before reaction with the carboxylic reactant.

The polyvinyl compounds making up the nucleus are illustrated by polyalkenyl arenes, e.g., divinyl benzene and poly vinyl aliphatic compounds.

Dienes making up the polymeric arms are illustrated by butadiene, isoprene and the like. Monoalkenyl compounds include, for example, styrene and alkylated derivatives thereof. In one embodiment, the arms are derived from dienes. In another embodiment, the arms are derived from dienes and vinyl substituted compounds. In yet another embodiment, the arms comprise polyisobutylene groups, often, isobutylene-conjugated diene copolymers. Arms derived from dienes are frequently substantially hydrogenated, provided that they are not exhaustively hydrogenated before reaction with the carboxylic reactant.

Star polymers are well known in the art. Such material and methods for preparing same are described in numerous publications and patents. including the following United States patents which are hereby incorporated herein by reference for relevant disclosures contained therein:

4,116,917,
4,141,847,
4,346,193,
4,358,565,
and
4,409,120.

Star polymers are commercially available, for example as Shellvis 200 sold by Shell Chemical Co.

Mixtures of two or more olefinically unsaturated hydrocarbon polymers may be used.

In another embodiment. mixtures of one or more of the olefinically unsaturated hydrocarbon polymers with one or more olefins, other than the olefinically unsaturated hydrocarbon polymers identified as reactant (A) of this invention, may be used. Examples include mixtures of any of the hydrocarbon polymers (A) with lower olefins, such as alpha-olefins containing up to about 100 carbon atoms, polyolefins, for example polyisobutylene, especially high vinylidene polyisobutylene, having molecular weights ranging from about 500 up to about 5,000, ethylene-propylene-diene compounds such as those identified by the tradename Trilene and marketed by Uniroyal Chemical Co., and others.

(B) The Carboxylic Reactant

The carboxylic reactant is at least one member selected from the group consisting of compounds of the formula

$$R^3C(O)(R^4)_nC(O)OR^5 \qquad (IV)$$

wherein each of $R^3$ and $R^5$ is independently H or a hydrocarbyl group, preferably H or lower alkyl, $R^4$ is a divalent hydrocarbylene group, and n is 0 or 1, and reactive sources thereof. Most preferably $R^3$ is H

Reactive sources include compounds of the formula

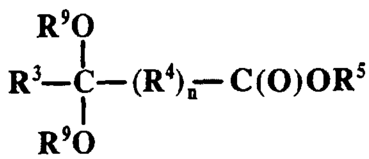

(VI)

wherein each of $R^3$ and $R^5$ and each $R^9$ is independently H or a hydrocarbyl group, $R^4$ is a divalent hydrocarbylene group, and n is 0 or 1. These include acetals, ketals, hemiacetals and hemiketals of (IV) and esters thereof. Highly preferred are the compounds wherein one of $R^9$ is hydrocarbyl and one is H:

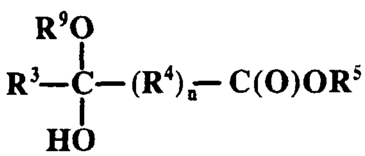

(V)

wherein each of $R^3$ and $R^5$ is independently H or a hydrocarbyl group, especially wherein the hydrocarbyl group is lower alkyl, $R^4$ is a divalent hydrocarbylene group, preferably lower alkylene, $R^9$ is hydrocarbyl, preferably lower alkyl, and n is 0 or 1, preferably 0. Especially preferred are the glyoxylate lower alkyl ester, lower alkyl hemiacetals. Cyclic trimers are useful.

Reactant (B) may be a compound of the formula

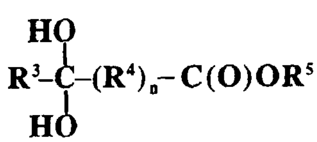

(VII)

wherein each of $R^3$ and $R^5$ is independently H or alkyl. Such compounds may arise when the carboxylic acid or ester reactant is hydrated.

$R^3$ is usually H or an aliphatic group, that is, alkyl or alkenyl, preferably alkyl, more preferably lower alkyl. Especially preferred is where $R^3$ is H or methyl, most preferably, H.

$R^4$ is a divalent hydrocarbylene group. This group may be aliphatic or aromatic, but is usually aliphatic. Often, $R^4$ is an alkylene group containing from 1 to about 3 carbon atoms. The 'n' is 0 or 1; that is, in one embodiment $R^4$ is present and in another embodiment, $R^4$ is absent. More often, $R^4$ is absent.

When $R^5$ is hydrocarbyl, it is usually an aliphatic group, often a group containing from 1 to about 30 carbon atoms, often from 8 to about 18 carbon atoms. In another embodiment, $R^5$ is lower alkyl, wherein "lower alkyl" is defined hereinabove. Most often, $R^5$ is H or lower alkyl, especially methyl, ethyl, propyl and butyl.

Examples of carboxylic reactants are glyoxylic acid, and other omega-oxoalkanoic acids, glyoxylic acid hydrate, keto alkanoic acids such as pyruvic acid, levulinic acid, ketovaleric acids, ketobutyric acids, esters thereof, preferably the lower alkyl esters, the hemiacetals and hemiketals of keto- or aldehydoalkanoic acids such as glyoxylic acid and

keto alkanoic acids such as pyruvic acid, levulinic acid, ketovaleric acids, and ketobutyric acids, and the corresponding acetals and ketals, and numerous others, including methyl glyoxylate methyl hemiacetal, 4-formylbenzoic acid, 4-formylphenoxyacetic acid, esters thereof, and carboxy benzaldehyde. The skiller worker, having the disclosure before him, will readily recognize the appropriate carboxylic reactant (B) employ to generate a given intermediate. Preferred carboxylic reactants are those that will lead to preferred products of this invention.

In an especially preferred embodiment, $R^3$ and one $R^9$ are hydrogen and the other $R^9$ and $R^5$ are methyl. In this preferred embodiment, the reactant is represented by the structure

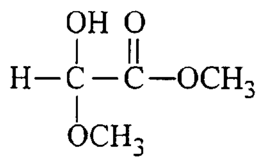

and known as glyoxylic acid methylester methylhemiacetal. It is marketed by DSM Fine Chemicals.

The Catalyst

The first step of the process of this invention is optionally conducted in the presence of an acidic catalyst. Acid catalysts, such as organic sulfonic acids, for example, para-toluene sulfonic acid and methane sulfonic acid, heteropolyacids, the complex acids of heavy metals (e.g., Mo, W, Sn, V, Zr, etc.) with phosphoric acids (e.g., phosphomolybdic acid), and mineral acids, for example, $H_2SO_4$ and phosphoric acid, are useful. Solid acidic catalysts are useful. These include materials such as acidic clays, for example $H_2SO_4$ treated diatomaceous earth supplied under the name Super Filtrol, and polymer-bound acids such as those supplied under the name Amberlyst. Among useful solid catalysts are acidic oxides such as $H_2SO_4$ treated $TiO_2$ and $Al_2O_3$. The amount of catalyst used is generally small. ranging from about 0.01 mole % to about 10 mole %, more often from about 0.1 mole % to about 2 mole %, based on moles of olefinic reactant.

(C) Ammonia, Hydrazine and Amine Reactants

Suitable (C) reactants, as defined herein, include ammonia, hydrazines, monoamines or polyamines. The (C) reactants must contain at least one N-H group.

The monoamines generally contain from 1 to about 24 carbon atoms. preferably 1 to about 12, and more preferably 1 to about 6. Examples of monoamines useful in the present invention include primary amines. for example methylamine, ethylamine, propylamine, butylamine, octylamine, and dodecylamine. Examples of secondary amines include dimethylamine, diethylamine, dipropylamine, dibutylamine, methylbutylamine, ethylhexylamine, etc. Tertiary monoamines will not result in formation of an amide, but can form salts with carboxylic acids.

In another embodiment, the monoamine may be a hydroxyamine. Typically, the hydroxyamines are primary or secondary amines or mixtures thereof. As stated above, tertiary monoamines will not react to form amides; however tertiary alkanol monoamines sometimes can react to form a tertiary amino group containing ester. Hydroxy amines that can react to form amide can be represented, for example. by the formulae:

**H,N—R'—OH,**

and

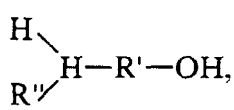

wherein each R" is independently a hydrocarbyl group, preferably alkyl or alkenyl, of one to about 22 carbon atoms or a hydroxyhydrocarbyl group. preferably aliphatic, of two to about 22 carbon atoms, preferably one to about four, and R' is a divalent hydrocarbyl group, preferably an alkylene group, of about two to about 18 carbon atoms, preferably two to about four. Typically, each R" is independently a methyl, ethyl, propyl, butyl, pentyl or hexyl group. The group -R'-OH in such formulae represents the hydroxyhydrocarbyl group. R' can be acyclic, alicyclic or aromatic. Typically,

R' is an acyclic straight or branched alkylene group such as an ethylene, 1,2-propylene, 1,2-butylene, 1,2-octadecylene, etc.

Examples of these alkanolamines include mono- and diethanolamine, 2-(ethylamino)ethanol, 2-(butylamino)ethanol, etc.

Hydroxylamine ($H_2N$-OH) is a useful condensable monoamine.

The hydroxyamines can also be ether-containing N-(hydroxyhydrocarbyl) amines. These are hydroxy poly(hydrocarbyloxy) analogs of the above-described hydroxy amines (these analogs also include hydroxyl-substituted oxyalkylene analogs). Such N-(hydroxyhydrocarbyl) amines can be conveniently prepared, for example, by reaction of epoxides with aforedescribed amines and can be represented by the formulae:

$$H_2N—(R'O)_x—H$$

and

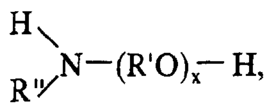

wherein x is a number from about 2 to about 15 and R' and R" are as described above. R" may also be a hydroxypoly (hydrocarbyloxy) group.

Other useful amines include ether amines of the general formula

$$R^aOR'NHR^b$$

wherein $R^a$ is a hydrocarbyl group, preferably an aliphatic group, more preferably an alkyl group, containing from 1 to about 24 carbon atoms, R' is a divalent hydrocarbyl group, preferably an alkylene group, containing from two to about 18 carbon atoms, more preferably two to about 4 carbon atoms and $R^b$ is H or hydrocarbyl, preferably H or aliphatic, more preferably H or alkyl, more preferably H. When $R^b$ is not H, then it preferably is alkyl containing from one to about 24 carbon atoms. Examples of ether amines include, but are not limited to, hexyloxypropylamine, dodecyloxypropylamine, octyloxypropylamine, and N-decyloxypropyl-1,3-diamino propane. Ether amines are available from Tomah Products, Inc. and under the name SURFAM produced and marketed by Sea Land Chemical Co., Westlake, Ohio.

The amine may be an amino heterocycle. Examples include aminopyridine, aminopropylimidazole, aminopyrimidine, amino-mercaptothiadiazoles, and aminotriazole.

The amine may also be a polyamine. The polyamine contains at least two basic nitrogen atoms and is characterized by the presence within its structure of at least one HN< group. Mixtures of two or more amino compounds can be used in the reaction. Preferably, the polyamine contains at least one primary amino group (i.e.. $-NH_2$) and more preferably is a polyamine containing at least two condensable -NH-groups, either or both of which are primary or secondary amine groups. The polyamine may be aliphatic, cycloaliphatic, heterocyclic or aromatic. Examples of the polyamines include alkylene polyamines, hydroxy containing polyamines, arylpolyamines. and heterocyclic polyamines.

Among the preferred polyamines are the alkylene polyamines, including the polyalkylene polyamines. The alkylene polyamines include those conforming to the formula

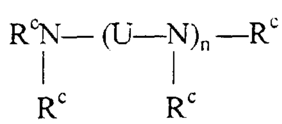

wherein n is from 1 to about 10; preferably about 2 to about 7, more preferably about 2 to about 5, each U is independently hydrocarbylene, preferably alkylene having from 1 to about 10 carbon atoms, often from about 2 to about 6, more preferably from about 2 to about 4 carbon atoms, each $R^c$ is independently a hydrogen atom, a hydrocarbyl group, preferably aliphatic, or a hydroxy-substituted or amine-substituted hydrocarbyl group, preferably aliphatic. having up to about 30 atoms, or two $R^c$ groups on different nitrogen atoms can be joined together to form a U group, with the proviso that at least one $R^c$ group is hydrogen. Preferably U is ethylene or propylene. Especially preferred are the

alkylene polyamines where each $R^c$ is hydrogen, lower alkyl, or an amino-substituted hydrocarbyl group, preferably aliphatic, with the ethylene polyamines and mixtures of ethylene polyamines being the most preferred.

Alkylene polyamines include methylene polyamines, ethylene polyamines, butylene polyamines, propylene polyamines, pentylene polyamines, etc. Higher homologs and related heterocyclic amines such as piperazines and N-amino alkylsubstituted piperazines are also included. Specific examples of such polyamines are ethylene diamine, diethylene triamine, triethylene tetramine, tris-(2-aminoethyl)amine, propylene diamine, trimethylene diamine, tripropylene tetramine, tetraethylene pentamine, hexaethylene heptamine, pentaethylenehexamine, aminoethyl piperazine, dimethyl aminopropylamine, etc.

Higher homologs obtained by condensing two or more of the above-noted alkylene amines are similarly useful as are mixtures of two or more of the aforedescribed polyamines.

Ethylene polyamines, such as some of those mentioned above, are preferred. They are described in detail under the heading "Diamines and Higher Amines" in Kirk Othmer's "Encyclopedia of Chemical Technology", 4th Edition, Vol. 8, pages 74-108, John Wiley and Sons, New York (1993) and in Meinhardt, et al, U.S. 4,234,435, both of which are hereby incorporated herein by reference for disclosure of useful polyamines. Such polyamines are conveniently prepared by the reaction of ethylene dichloride with ammonia or by reaction of an ethylene imine with a ring opening reagent such as water, ammonia, etc. These reactions result in the production of a complex mixture of polyalkylene polyamines including cyclic condensation products such as the aforedescribed piperazines. The mixtures are particularly useful. On the other hand, quite satisfactory products can be obtained by the use of pure alkylene polyamines. Ethylene polyamine mixtures are useful.

Other useful types of polyamine mixtures are those resulting from stripping of the above-described polyamine mixtures removing lower molecular weight polyamines and volatile components to leave as residue what is often termed "polyamine bottoms". In general, alkylene polyamine bottoms can be characterized as having less than 2%, usually less than 1% (by weight) material boiling below about 200°C. In the instance of ethylene polyamine bottoms, which are readily available and found to be quite useful, the bottoms contain less than about 2% (by weight) total diethylene triamine (DETA) or triethylene tetramine (TETA). A typical sample of such ethylene polyamine bottoms obtained from the Dow Chemical Company of Freeport, Texas, designated "E-100" has a specific gravity at 15.6°C of 1.0168, a percent nitrogen by weight of 33.15 and a viscosity at 40°C of 121 centistokes. Gas chromatography analysis of such a sample showed it contains about 0.93% "Light Ends" (most probably diethylenetriamine), 0.72% triethylenetetramine. 21.74% tetraethylene pentamine and 76.61% pentaethylene hexamine and higher (by weight). These alkylene polyamine bottoms include cyclic condensation products such as piperazine and higher analogs of diethylenetriamine, triethylenetetramine and the like.

In another embodiment, the polyamines are hydroxy-containing polyamines provided that the polyamine contains at least one condensable -N-H group. Hydroxy-containing polyamine analogs of hydroxy monoamines, particularly alkoxylated alkylenepolyamines can also be used. Typically, the hydroxyamines are primary or secondary alkanol amines or mixtures thereof. Such amines can be represented by mono- and poly-N-hydroxyalkyl substituted alkylene polyamines wherein the alkylene polyamines are as described hereinabove; especially those that contain two to three carbon atoms in the alkylene radicals and the alkylene polyamine contains up to seven amino groups. Such polyamines can be made by reacting the above-described alkylene amines with one or more of the above-described alkylene oxides. Similar alkylene oxide-alkanolamine reaction products can also be used such as the products made by reacting the aforedescribed primary, secondary or tertiary alkanolamines with ethylene, propylene or higher epoxides in a 1.1 to 1.2 molar ratio. Reactant ratios and temperatures for carrying out such reactions are known to those skilled in the art.

Specific examples of alkoxylated alkylenepolyamines include N-(2-hydroxyethyl) ethylenediamine, N,N-di-(2-hydroxyethyl)-ethylenediamine, 1-(2-hydroxyethyl) piperazine. mono-(hydroxypropyl)-substituted tetraethylenepentamine, N-(3-hydroxybutyl)-tetramethylene diamine, etc. Higher homologs obtained by condensation of the above illustrated hydroxy-containing polyamines through amino groups or through hydroxy groups are likewise useful. Condensation through amino groups results in a higher amine accompanied by removal of ammonia while condensation through the hydroxy groups results in products containing ether linkages accompanied by removal of water. Mixtures of two or more of any of the aforesaid polyamines are also useful.

The polyamines may be polyoxyalkylene polyamines, including polyoxyethylene and polyoxypropylene diamines and the polyoxypropylene triamines having average molecular weights ranging from about 200 to about 2000. Polyoxyalkylene polyamines are commercially available, for example under the tradename "Jeffamines" from Huntsman Chemical Co. U.S. Patent numbers 3,804,763 and 3.948,800 contain disclosures of polyoxyalkylene polyamines and are incorporated herein by reference for their disclosure of such materials.

In another embodiment, the polyamine may be a heterocyclic polyamine. The heterocyclic polyamines include aziridines, azetidines, azolidines, tetra- and dihydropyridines, pyrroles, indoles, piperidines, imidazoles, di- and tetrahydroimidazoles, piperazines, isoindoles, purines, N-aminoalkylmorpholines, N-aminoalkylthiomorpholines, N-aminoalkylpiperazines, N,N'-bisaminoalkyl piperazines, azepines, azocines, azonines, azecines and tetra-, di- and perhydro derivatives of each of the above and mixtures of two or more of these heterocyclic amines. Preferred heterocyclic

amines are the saturated 5- and 6-membered heterocyclic amines containing only nitrogen, or nitrogen with oxygen and/or sulfur in the hetero ring, especially the piperidines, piperazines, thiomorpholines, morpholines, pyrrolidines. and the like. Piperidine, aminoalkyl substituted piperidines, piperazine, aminoalkyl substituted piperazines, morpholine, aminoalkyl substituted morpholines, pyrrolidine, and aminoalkyl-substituted pyrrolidines, are especially preferred. Usually the aminoalkyl substituents are substituted on a nitrogen atom forming part of the hetero ring. Specific examples of such heterocyclic amines include N-aminopropylmorpholine, N-aminoethylpiperazine, and N,N'-diaminoethylpiperazine. Hydroxy alkyl substituted heterocyclic polyamines are also useful. Examples include N-hydroxyethylpiperazine and the like.

In another embodiment, the amine is a polyalkene-substituted amine. These polyalkene-substituted amines are well known to those skilled in the art. They are disclosed in U.S. patents 3,275,554; 3,438,757; 3,454,555: 3,565,804; 3,755,433; and 3,822,289. These patents are hereby incorporated by reference for their disclosure of polyalkene-substituted amines and methods of making the same.

Typically, polyalkene-substituted amines are prepared by reacting halogenated-, preferably chlorinated-, olefins and olefin polymers (polyalkenes) with amines (mono- or polyamines). The amines may be any of the amines described above. Examples of these compounds include poly(propylene)amine; N.N-dimethyl-N-poly (ethylene/propylene)amine, (50:50 mole ratio of monomers); polybutene amine; N,N-di(hydroxyethyl)-N-polybutene amine; N-(2-hydroxypropyl)-N-polybutene amine; N-polybutene-aniline; N-polybutenemorpholine; N-poly(butene) ethylenediamine: N-poly(propylene)trimethylenediamine; N-poly(butene)diethylenetriamine; N',N'-poly(butene)tetraethylenepentamine: N,N-dimethyl-N'-poly-(propylene)-1,3-propylenediamine and the like.

The polyalkene substituted amine is characterized as containing from at least about 8 carbon atoms, preferably at least about 30, more preferably at least about 35 up to about 300 carbon atoms, preferably 200, more preferably 100. In one embodiment, the polyalkene substituted amine is characterized by an n (number average molecular weight) value of at least about 500. Generally, the polyalkene substituted amine is characterized by an n value of about 500 to about 5000, preferably about 800 to about 2500. In another embodiment n varies between about 500 to about 1200 or 1300.

The polyalkenes from which the polyalkene substituted amines are derived include homopolymers and interpolymers of polymerizable olefin monomers of 2 to about 16 carbon atoms; usually 2 to about 6, preferably 2 to about 4, more preferably 4. The olefins may be monoolefins such as ethylene, propylene, 1-butene, isobutene, and 1-octene; or a polyolefinic monomer, preferably diolefinic monomer, such 1,3-butadiene and isoprene. Preferably, the polymer is a homopolymer. An example of a preferred homopolymer is a polybutene, preferably a polybutene in which about 50% of the polymer is derived from isobutylene. The polyalkenes are prepared by conventional procedures.

Another useful polyamine is a condensation product obtained by reaction of at least one hydroxy compound with at least one polyamine reactant containing at least one primary or secondary amino group. These condensation products are characterized as being a polyamine product having at least one condensable primary or secondary amino group, made by contacting at least one hydroxy-containing material (b-i) having the general formula

$$(R)_nY_z—X_p—(A(OH)_q)_m \qquad (I)$$

wherein each R is independently H or a hydrocarbon based group, Y is selected from the group consisting of O, N, and S, X is a polyvalent hydrocarbon based group, A is a polyvalent hydrocarbon based group, n is 1 or 2, z is 0 or 1, p is 0 or 1, q ranges from 1 to about 10, and m is a number ranging from 1 to about 10; with (b-ii) at least one amine having at least one N-H group.

The hydroxy material (b-i) can be any hydroxy material that will condense with the amine reactants (b-ii). These hydroxy materials can be aliphatic, cycloaliphatic, or aromatic; monools and polyols. Aliphatic compounds are preferred, and polyols are especially preferred. Highly preferred are aminoalcohols, especially those containing more than one hydroxyl group. Typically, the hydroxy-containing material (b-i) contains from 1 to about 10 hydroxy groups.

Monools useful as (b-i) are primary or secondary, preferably alkyl, monohydric compounds, preferably containing from 1 to about 100 carbon atoms. more preferably up to about 28 carbon atoms. Examples include methanol, ethanol, butanols, cyclohexanol, 2-methylcyclohexanol, isomeric octanols and decanols, octadecanol, behenyl alcohol, neopentyl alcohol, benzyl alcohol, beta-phenylethyl alcohol, and chloroalkanols.

Further examples are monoether- and polyether-containing monools derived from oxyalkylation of alcohols, carboxylic acids, amides, or phenolic materials, by reaction with alkylene oxides. When two or more different alkylene oxides are employed, they may be used as mixtures or consecutively, as discussed in greater detail herinbelow. These ether-containing monools can be represented by the general structure:

$$R\text{-}(OR^d)_a\text{-}(OR^e)_b\text{-}(OR^f)_c\text{-}OH$$

wherein R = hydrocarbyl, acyl, or carboxamidoalkyl; preferably containing from 1 to about 28 carbon atoms, each of $R^d$, $R^e$ and $R^f$ is hydrocarbylene containing from 2 to about 12 carbon atoms. more often 2 or 3 carbon atoms; a, b, and c = 0-100, provided that the total of a, b, and c is at least 1. When R is hydrocarbyl, it may be alkyl-, aryl-, arylalkyl-, or alkylaryl-. In one embodiment, a and b may from zero to about 12, preferably from zero to about 6, while in another embodiment, a and b range up to about 100.

Examples include 2-alkoxyethanols. members of the "Cellosolve" family of glycol ethers made by Union Carbide Corporation, and 2-(polyalkoxy)ethanol. Other commercially available products of alcohol alkoxylation include Neodol® ethoxylated linear and branched alcohols from Shell Chemical, Alfonic® ethoxylated linear alcohols from Vista Chemical, propoxylated alcohols from ARCO Chemicals, UCON® propoxylated alcohols from Union Carbide. Provol® propoxylated fatty alcohols from Croda Chemical, and Carbowax methoxy polyethylene glycols, such as Carbowax® 350 and 750 from Union Carbide .

Aryl analogs of lower ether-containing monools include, for example, 2-(nonylphenoxyethyloxy)ethanol, 2-(octylphenoxyethyl-oxyethyloxy)ethanol and higher homologs made using greater amounts of alkylene oxides, marketed under the TRITON® trademark by Union Carbide.

As noted hereinabove, polyether monools may also be prepared by condensation of 2 or more different alkylene oxides, in mixtures or consecutively, with alcohols, alkylphenols or amides. Commercially available polyether monools made from reaction of mixtures of ethylene oxide and propylene oxide with butanol are represented by the UCON® 50-HB- and 75-HB-series of functional fluids from Union Carbide, while similar products from mixtures of propylene oxide and higher (e.g., $C_4$-$C_{10}$) alkylene oxides are sold by BP Chemicals under the Breox® tradename.

Polyols are defined herein as compounds containing at least two hydroxy groups.

Dihydroxy compounds include alkylene glycols of general structure HO-(-R-)-OH, wherein R is hydrocarbylene. Examples are ethylene glycol, 1,2-propanediol, 1,2-, 1,3- and 1,4-butylenediols, 1,6-hexanediol, neopentylene glycol, 1,10-decanediol, cyclohexane-1,4-diol and 1,4-bis-(hydroxymethyl) cyclohexane.

Other diols include ether-diols and polyether diols (glycols). These may be represented by the general structure:

$$HO\text{-}(OR^d)_a\text{-}(OR^e)_b\text{-}(OR^f)_c\text{-}OH$$

wherein $R^d$, $R^e$ and $R^f$ are independently $C_2$-$C_{12}$ hydrocarbylene, more often ethylene or propylene, and a, b and c are independently zero to about 100, provided that the total of a, b, and c is at least 1. Examples of ether- and polyether-diols are diethylene glycol, triethylene glycol, tetraethylene glycol, dipropylene glycol, 2-(2-hydroxyethyloxy)-1 -propanol and 1,2-bis-(2-hydroxypropyloxy)ethane, polyoxyalkylene oxides of the Carbowax© family of polyethylene glycols from Union Carbide, the Pluronic® P-series of polypropylene oxide diols from BASF, polyoxybutylene glycols from Dow Chemical, and the like.

In addition to monools and diols, other useful alcohols include polyhydric alcohols having three or more HO- groups, preferably those containing up to about 12 carbon atoms, and especially those containing from about 3 to about 10 carbon atoms. Useful polyhydric polyols include. glycerol, trimethylol propane, 2-ethyl?-hydroxymethyl-1.3-propanediol, erythritol, pentaerythritol, dipentaerythritol, glucose, arabinose, 1,2,3-hexane triol, 2,3,4-hexanetriol, butanetriols, and polyglycerols (including the ether-coupled glycerol dimer, trimer, tetramer, etc.)

Aminoalcohols are useful hydroxy containing compounds. Aminoalcohols may be aliphatic, cycloaliphatic or aromatic, containing at least one hydroxy group and preferably containing two or more hydroxy groups. These may be prepared by methods known in the art, for example, by reaction of an amine having at least one N-H group with an alkylene oxide. Another procedure is to condense an aldehyde, particularly formaldehyde, with a nitro compound followed by reduction of nitro groups.

Useful aminoalcohols include monoamino and polyamino compounds. These may be monohydroxy or polyhydroxy compounds, depending, for example on the extent of reaction with alkylene oxide. For example. a primary amine may react with one or two alkylene oxides, forming mono- or di-hydroxyalkylamines. Polyalkoxy ether containing aminoalcohols are also useful. These may be prepared by reaction of ammonia or a primary or secondary amine with an excess of alkylene oxide.

Some of the more useful aminoalcohols are the reduced condensation products of formaldehyde with nitroalkanes. Particularly useful are 2-amino-2-(2-hydroxymethyl)-1,3-propane-diol (commonly known as "THAM", or "TrisAmino"), 2-amino-2-ethyl-1,3-propanediol, and 2-amino-2-methyl-1,3-propanediol.

Examples of other useful aminoalcohols include N-(N)-hydroxy-lower alkyl) amines and polyamines such as di-(2-hydroxyethyl) amine, aminoethanol, triethanolamine, dibutylaminoethanol, tris(hydroxypropyl)amine, N,N,N',N'-tetra-(hydroxyethyl)trimethylene-diamine, and the like.

Examples of commercially available oxyalkylated amines include members of the Ethomeen® and Propomeen® series of ethoxylated and propoxylated primary and secondary amines from AKZO Chemie. Ethylene diamine/propylene oxide products constitute the Tetronic® family of polyoxyalkylated diamine available from BASF/Wyandotte Corporation.

Reaction of ethylene oxide or propylene oxide with polyglycolamine from Union Carbide gives the corresponding di-(2-hydroxyalkyl)-ether amine. Similar reaction of these alkylene oxides with Jeffamine® polyoxypropylamines from Huntsman Chemical results in the formation of N-hydroxyalkylated derivatives. Corresponding products may be made by hydroxyalkylation of 3-(higher alkyloxy)propylamines.

Other useful hydroxy-containing reactants are hydroxyalkyl-, hydroxyalkyl oxyalkyl-, and corresponding aryl derivatives thereof, sulfides of the formula

$$R-S_a-(R^dO)_b-H$$

wherein R is a hydrocarbyl or hydroxyhydrocarbyl group containing from 1 to about 22 carbon atoms, $R^d$ is a hydrocarbylene group containing 2 to 12 carbons, a is 1 or 2; and b ranges from 1 to about 20. Examples include 2-(dodecylthio)ethanol, thiodiethanol, and 2-hydroxyethyl disulfide.

The hydroxy compounds are preferably polyhydric alcohols and amines, preferably polyhydric amines. Polyhydric amines include any of the above-described monoamines reacted with an alkylene oxide (e.g., ethylene oxide, propylene oxide, butylene oxide, etc.) having two to about 20 carbon atoms, preferably 2 to about 4. Examples of polyhydric amines include tri-(hydroxypropyl)amine, tris-(hydroxymethyl)amino methane, 2-amino-2-methyl-1,3-propanediol, N,N,N',N'-tetrakis(2-hydroxypropyl) ethylenediamine, and N,N,N',N'-tetrakis(2-hydroxyethyl) ethylenediamine.

Among the preferred amines making up b(ii) are the alkylene polyamines, including the polyalkylene polyamines. In another embodiment, the polyamine may be a hydroxyamine provided that the polyamine contains at least one condensable -N-H group.

Preferred polyamine reactants include triethylenetetramine (TETA), tetraethylenepentamine (TEPA), pentaethylenehexamine (PEHA), and mixtures of polyamines such as the above-described "amine bottoms".

Preferred combinations of reactants for making the polyamine product include those in which reactant (b-i) is a polyhydric alcohol having three hydroxyl groups or an amino alcohol having two or more hydroxy groups and reactant (b-ii) is an alkylene polyamine having at least two primary nitrogen atoms and wherein the alkylene group contains 2 to about 10 carbon atoms.

The reaction is conducted in the presence of an acid catalyst at an elevated temperature. Catalysts useful for the purpose of this invention include mineral acids (mono, di- and poly basic acids) such as sulfuric acid and phosphoric acid; organophosphorus acids and organo sulfonic acids, alkali and alkaline earth partial salts of $H_3PO_4$ and $H_2SO_4$, such as $NaHSO_4$, $LiHSO_4$, $KHSO_4$, $NaH_2PO_4$, $LiH_2PO_4$ and $KH_2PO_4$; $CaHPO_4$, $CaSO_4$ and $MgHPO_4$; also $Al_2O_3$ and Zeolites. Phosphorus and phosphoric acids and their esters or partial esters are preferred because of their commercial availability and ease of handling. Also useful as catalysts are materials which generate acids when treated in the reaction mixture, e.g., triphenylphosphite. Catalysts are subsequently neutralized with a metal-containing basic material such as alkali metal, especially sodium, hydroxides.

The reaction to form the polyamine products is run at an elevated temperature which can range from 60°C to about 265°C. Most reactions, however, are run in the 220°C to about 250°C range. The reaction may be run at atmospheric pressure or optionally at a reduced pressure. The degree of condensation of the resultant high molecular weight polyamine prepared by the process is limited only to the extent to prevent the formation of solid products under reaction conditions. The control of the degree of condensation of the product of the present invention is normally accomplished by limiting the amount of the condensing agent, i.e., the hydroxyalkyl or hydroxy aryl reactant charged to the reaction. The resulting product frequently contains the neutralized catalyst and significant amounts by weight, from about 0.1%, often at least 1%, frequently 5% up to 20%, often up to 10%, water.

The amine condensates and methods of making the same are described in Steckel (US 5,053,152) which is incorporated by reference for its disclosure to the condensates and methods of making.

The preparation of various polyamine products is illustrated in the following examples. All percentages and all parts are by weight unless otherwise clearly indicated. Temperatures are in degrees Celsius. Filtrations are conducted using a diatomaceous earth filter aid.

Example C-1

A reactor is charged with 1000 parts of an ethylene polyamine bottoms identified as HPA-X (Union Carbide) and 613 parts of 40% aqueous tris-hydroxymethylamino-methane (THAM). An $N_2$ purge is started and is maintained throughout processing The materials are heated to 49°C whereupon 15.9 parts 85% aqueous phosphoric acid are added and the temperature is increased to 177°C. Conditions are adjusted to enable condensation and reflux of the amine while allowing water to be removed from the system. The temperature is then increased to 227°C and is held at 227-232°C for 10 hours while refluxing the amines. The mixture is then stripped by heating at 232-238°C for 6 hours, then is rapidly cooled to 93°C whereupon 127 parts water are added followed by the addition of 22.1 parts 50% aqueous NaOH. The batch is mixed for 4 hours at 88-93°C. The unfiltered product contains 27% N, 0.35% P, and 11% $H_2O$.

Example C-2

A 4 necked, 500-ml, round-bottom flask equipped with glass stirrer, thermowell, subsurface $N_2$ inlet, Dean-Stark trap, and Friedrich condenser is charged with 201 parts of tetraethylenepentamine (TEPA), 151 parts of 40% aqueous THAM, and 3.5 parts of 85% $H_3PO_4$. The mixture is heated to 120° C over 1.0 hour. With $N_2$ sweeping, the mixture is heated to 130° C over 1 hour and to 230° C over 2 hours more. The temperature is maintained at 230°-240° C for 4 hours and at 241°-250° C for 3 hours. The materials are cooled to 150° C and filtered.

Example C-3

A 4 necked, 3-1, round-bottom flask equipped with glass stirrer, thermowell, subsurface $N_2$ inlet, Dean-Stark trap, and Friedrich condenser is charged with 1299 parts HPA Taft Amines (amine bottoms), 727 parts 40% aqueous tris (hydroxymethyl)-aminomethane, heated to 60°C whereupon 23 parts 85% $H_3PO_4$ are added. The mixture is heated to 120° C. over 0.6 hr. With $N_2$ sweeping, the mixture is heated to 150° C. over 1.25 hr and to 235° C over 1 hr. more. The materials are held at 230°-235° C. for 5 hours. The temperature is increased to 240° C over 0.75 hour and is held at 240°-245°C for 5 hour. The materials are cooled to 150° C and filtered. Yield: 84%.

Example C-4

A 3-liter flask equipped with stirrer, thermowell, below surface $N_2$ inlet and a stripping condenser is charged with 363 parts of THAM and 1200 parts of TEPA. Next are added 16 parts of $H_3PO_4$ at 110°C. $N_2$ blowing is commenced at 120 cc/min. The mixture is heated to 220°C in 0.8 hour and held at 220°-225°C for 1.2 hour; then heated to 230°C in 0.2 hour and held at 230°C for 4.75 hours: 129 parts distillate collected. The mixture is held at 242°-245°C for 5 hours: 39 parts additional distillate is collected. Temperature is maintained at 246°-255°C for 1.2 hr: 178 parts material in trap. The mixture is filtered at 155°C.

Example C-5

A 3-liter flask equipped with stirrer, thermowell, below surface $N_2$ inlet and a stripping condenser was charged with 363 parts THAM and 1200 parts TEPA. At 100°C are added 16 parts $H_3PO_4$. $N_2$ blowing is commenced at 95 cc/min. The mixture is heated to 165°C in 0.4 hour; and to 241°C in 0.6 hour, then held at 241°-243°C for 0.3 hour. The contents are further heated to 250°C for an additional 0.5 hour and held at 250 °C for 5.5 hour: 288 parts distillate are collected in the trap. Materials are filtered at 150°C.

Example C-6

A 1-liter flask equipped with stirrer, thermowell, below surface $N_2$ inlet and Dean-Stark trap was charged with 121 parts THAM and 400 parts TEPA. To this mixture are added 8.2 parts of $KH_2PO_4$ at 60°C. $N_2$ blowing is commenced at 70 cc/min. The reaction mixture is heated to 150°C over I hour, and to 230°C, over 1.5 hours. The temperature is held at 230°C-232°C for 4.25 hour: 17 parts material collected in trap. The mixture is held at 237°C for 3.25 hour: 38 parts material collected in trap. The mixture is further heated to 241°C over 0.75 hour and is held at 241°C-242C for 4.75 hour; 50 parts material collected in trap. The material is held at 250°C. for 5 hour; total of 53 parts material collected in trap. Filter at 150°C.

Example C-7

To a 500 ml flask equipped with stirrer, thermowell, below surface $N_2$ inlet and Dean-Stark trap is charged with

201 parts TEPA and 468 parts glycerol. 2.3 parts $H_3PO_4$ are added at 80°C. $N_2$ blowing is commenced at 165 cc/min. The mixture is heated to 220°C. over 2 hours; to 240°C. in 1 hour; to 245°C, in 1.5 hour and to 255°C. in 1 hour. The temperature is held at 255°-252°C, for hours: 12 parts material collected in trap. The mixture is held at 255°-262°C. for 7 hours: 34 parts distillate collected in trap. The temperature of the mixture is held at 255°-260°C for 1 hour more. A total of 36 parts distillate is collected in trap. Filter at 130°C.

Example C-8

To a 500 ml flask equipped with stirrer, thermowell, below surface $N_2$ inlet and Dean-Stark trap are charged 201 parts TEPA and 45 parts hexaglycerol. To this mixture 3.5 parts $H_3PO_4$ are added at 85°C. $N_2$ blowing is commenced at 165 cc/min. The mixture is heated to 245°C over 0.7 hour and held at 245°-260°C for 1.75 hour. The mixture is held at 260°-270°C for 7.5 hour: total of 27 parts material collected in trap. Filter at 125°C.

Example C-9

The procedure of Example C-1 is repeated replacing (THAM) with an equivalent amount, based on -OH, of dibutylaminoethanol.

In one embodiment, the amine is the reaction product of any of the aforementioned polyamines with at least one of a carboxylic acid, lactone, anhydride,, and ester wherein the resulting product contains at least one condensable N-H group. Such a material may be obtained by employing an excess of amine reactant relative to the carboxylic reactant.

Suitable amines of this type include, but are not limited to the reaction product of mono- and poly- carboxylic acids and functional derivatives thereof, such as anhydrides, with at least one polyamine, preferably an alkylene polyamine as defined hereinabove, containing at least two condensable -N-H groups, provided that the resulting product contains at least one condensable N-H group. Exemplary of the patent literature describing such materials are U.S. Patent Nos. 3,172,892; 3,219,666; and 4,234,435 each of which is expressly incorporated herein by reference, and numerous others..

The reaction product of amine and carboxylic reactant may be reacted with a wide variety of other reactants. Exemplary reagents include carbon disulfide, $H_2S$, boron containing reagents such as boric acid, boron anhydride, boron esters, and the like, sulfur, sulfur chloride, alkenyl cyanides, carboxylic acid acylating agents such as acids, anhydrides and lactones, aldehydes, ketones, acetals, ketals, carbonates, orthoformates, urea, thiourea, guanidine, dicyanodiamide, hydrocarbyl phosphates, hydrocarbyl phosphites, hydrocarbyl thiophosphates, hydrocarbyl thiophosphites, phosphorus sulfides, phosphorus oxides, phosphoric acid, hydrocarbyl thiocyanates, hydrocarbyl isocyanates, hydrocarbyl isothiocyanates, epoxides, episulfides, formaldehyde or formaldehyde producing compounds plus phenols. These may be used as the amine provided they contain at least on condensable N-H group.

Examples of reaction products of amines and carboxylic reactants useful as the amine (C) include:

Example 10

A reaction flask is charged with 698 parts of mineral oil and 108 parts of a commercial polyethylene polyamine mixture having typical %N= 34. The materials are stirred and heated to 135°C at which time 1000 parts of a polybutene ($\overline{M}_n \cong 1000$) substituted succinic anhydride are added over 1 hour. With $N_2$ sparging, the temperature is increased to 160°C and held there for 4 hours while removing water and other volatile components. The product is filtered using a diatomaceous earth filter aid yielding a filtrate typically containing 2% N and a total base number of 45.

Example C-11

The procedure of example C-10 is repeated except that before filtration. the materials are reacted with 28 parts of terephthalic acid at 160° for three hours. The product has typical analyses of 1.9% N and a total base number = 35.

Example 12

The procedure of Example C-10 is repeated except that before filtration the materials are reacted with 21 parts $CS_2$ to give a sulfur and nitrogen containing condensate.

Example C-13

A polybutene having a number average molecular weight = 1350 (1000 parts) is reacted with 106 parts maleic

anhydride with $Cl_2$ blowing (total $Cl_2$ about 90 parts). To a reactor containing 1000 parts of the substituted succinic anhydride is added 1050 parts mineral oil, the materials are heated, with mixing, to 120°C, followed by addition of 70 parts of the commercial amine mixture described in Example C-10. The reaction mixture is heated to 155°C over 4 hours with $N_2$ sparging to remove volatiles then filtered employing a diatomaceous earth filter aid. The filtrate typically contains, by analysis, 1.1%N and has a total base number = 20.

Example C-14

An acylated polyamine is prepared by reacting 1000 parts of polyisobutenyl ($\overline{M}_n$ 1000) substituted succinic anhydride with 85 parts of a commercial ethylene polyamine mixture having an average nitrogen content of about 34.5% in 820 parts mineral oil diluent under conditions described in LeSuer US 3,172,892.

Example C-15

A boron containing composition is prepared by reacting a mixture of 275 parts mineral oil, 147 parts of a commercial ethyleneamine mixture having an average composition corresponding to that of tetraethylenepentamine and 1000 parts of polyisobutene ($\overline{M}_n$ ≈1000) substituted succinic anhydride at 120-125°C for 2 hours and at 150°C for 2 hours then blown with nitrogen at 150°C for 5 hours to form an acylated amine. To a slurry of 239 parts boric acid in 398 parts mineral oil there is added 1405 parts of above acylated amine over a period of 2 hours. The mixture is heated to 150°C for 7 hours and filtered employing a diatomaceous earth filter aid to give a liquid product typically containing, by analysis, 1.9% B and 2.3%N.

Example C-16

A solution of 698 parts mineral oil and 108 parts commercial ethylene polyamine mixture containing an average of about 34% nitrogen is prepared and heated to 115°C. To the oil solution is added 1000 parts of a $N_2$ blown polybutenyl-substituted succinic anhydride prepared by reacting a mixture of 1000 parts of polyisobutene having number average molecular weight of about 1000 and 108 parts (1.1 moles) of maleic anhydride at about 185-190°C while 100 parts (1.43 moles) $Cl_2$ are added beneath the surface for 4 hours, under $N_2$ followed by heating to 150°C. The reaction is continued at 143-150°C for 1 hour. The product is then filtered.

Example C-17

The procedure of Example C-13 is repeated except the polybutenyl group on the substituted succinic anhydride is derived from a polyisobutene having a number average molecular weight, measured by vapor phase osmometry, of about 1700.

Example C-18

A reactor is charged with 400 parts mineral oil and 1000 parts of a $N_2$ blown polyisobutenyl ($\overline{M}_n$ = 1000) succinic anhydride while mixing under an $N_2$ purge. The temperature is adjusted to 88°C followed by addition of 152 parts of the product of Example C-1 while maintaining 88-93°C. The batch is mixed for 2 hours at 82-96°C, then the temperature is increased to 152°C over 5.5 hours. At 152°C the $N_2$ purge is discontinued and submerged $N_2$ is begun. The batch is heated at 149-154°C until % $H_2O$ is no more than 0.30% by weight. The materials are cooled and filtered at 138-149°C and adjusted with oil to give total oil of about 40% by weight. The product contains 2.15%N.

Example C-19

The procedure of Example C-18 is followed employing 1000 parts of the $N_2$ blown succinic anhydride, 720 parts mineral oil and 111.3 parts of the product of Example C-1. The product contains 1.65% N.

Example C-20

The procedure of example C-18 is repeated except that before filtration, the materials are reacted with 28 parts of terephthalic acid at 160° for three hours.

Example C-21

The procedure of Example C-18 is repeated except that before filtration the materials are reacted with 21 parts $CS_2$ to give a sulfur and nitrogen containing condensate.

Example C-22

A polybutene having a number average molecular weight = 1350 (1000 parts) is reacted with 106 parts maleic anhydride with $Cl_2$ blowing (total $Cl_2$ about 90 parts) to prepare a substituted succinic anhydride. To a reactor containing 1000 parts of the substituted succinic anhydride are added 1050 parts mineral oil, the materials are heated, with mixing, to 120°C, then 70 parts of the product of Example C-1 are added. The reaction mixture is heated to 155°C over 4 hours with $N_2$ sparging to remove volatiles then filtered employing a diatomaceous earth filter aid.

Example C-23

An acylated polyamine is prepared by reacting 1000 parts of polyisobutenyl ($\overline{M}_n$ = 1000) substituted succinic anhydride with 85 parts of the product of Example C-1 in 820 parts mineral oil diluent under conditions described in Example C-18.

Example C-24

A boron containing composition is prepared by reacting a mixture of 275 parts mineral oil, 147 parts of the product of Example C-1 and 1000 parts of polyisobutene ($\overline{M}_n \approx 1000$) substituted succinic anhydride at 120-125°C for 2 hours, at 150°C for 2 hours, then blowing with nitrogen at 150°C for 5 hours to form an acylated amine. To a slurry of 239 parts boric acid in 398 parts mineral oil there are added 1405 parts of above acylated amine over a period of 2 hours. The mixture is heated to 150°C for 7 hours and filtered employing a diatomaceous earth filter aid to give a liquid product containing B and N.

Example C-25

A solution of 698 parts mineral oil and 108 parts of the ethylene polyamine of Example C-1 is prepared and heated to 115°C. To the oil solution is added 1000 parts of the polybutenyl-substituted succinic anhydride of Example C-3 under $N_2$ followed by heating to 150°C. The reaction is continued at 143-150°C for 1 hour. The product is then filtered.

Example C-26

The procedure of Example C-12 is repeated except the polybutenyl group on the substituted succinic anhydride is derived from a polyisobutene having a number average molecular weight, measured by vapor phase osmometry, of about 1700.

Example C-27

The procedure of Example C-10 is repeated except the reaction mixture includes 0.1 equivalent of polyether carboxylic acid sold under the tradename Neodox (Shell Chemical) per each C=O of succinic anhydride reactant.

Example C-28

A reactor is charged with 3000 parts of a polyisobutene having a number average molecular weight of about 1000 and which contains about 80 mole % terminal vinylidene groups and 6 parts 70% aqueous methanesulfonic acid. The materials are heated to 160°C under $N_2$ followed by addition of 577.2 parts 50% aqueous glyoxylic acid over 4 hours while maintaining 155-160°C. Water is removed and is collected in a Dean-Stark trap. The reaction is held at 160°C for 5 hours, cooled to 140°C and filtered. The filtrate has total acid no. (ASTM Procedure D-974) = 34.7 and saponification no. (ASTM Procedure D-74) = 53.2. $\overline{M}_n$ (Gel permeation chromatography (GPC)) = 1476 and $\overline{M}_w$ (GPC) = 3067; unreacted polyisobutene (Thin layer chromatography-Flame ionization detector (TLC-FID)) = 8.6%. Another reactor is charged with 350 parts of the product of Part A of Example 1, 17.2 parts diethylene triamine and 267.5 parts mineral oil diluent, heated under $N_2$ to 160°C and held at 160°C for 5 hours. Filtered 145°C. Filtrate contains 1.02% N..

(D) The Hydrocarbyl Substituted Carboxylic Acid, Lactone, Anhydride and Ester.

Optionally. the compositions of this invention are prepared employing an additional reactant (D), at least one of a carboxylic acid, lactone, anhydride, and ester. Suitable carboxylic acids or anhydrides are hydrocarbyl substituted, preferably oil-soluble. These may be aromatic, cycloaliphatic and aliphatic. Preferably the hydrocarbyl substituent is aliphatic and contains at least 8 carbon atoms. more preferably at least about 30 carbon atoms. In another embodiment (D) comprises a mixture of two or more of the hydrocarbyl substituted carboxylic acids, lactones, anhydrides, and esters wherein the mixture comprises at least one of aliphatic substituted carboxylic acids, lactones, anhydrides, and esters containing from about 12 to about 24 carbon atoms in the aliphatic substituent and at least one of aliphatic substituted carboxylic acids, lactones, anhydrides, and esters having at least about 40 carbon atoms in the aliphatic substituent.

Patents describing useful aliphatic carboxylic acids, lactones, anhydrides, and esters and methods for preparing them include, among numerous others. U.S. Pat. Nos. 3,215,707 (Rense); 3,219,666 (Norman et al), 3,231,587 (Rense); 3,912,764 (Palmer); 4,110,349 (Cohen); and 4,234,435 (Meinhardt et al); European Patent Publications EP 0759443, EP 0759444 and EP 0759435; and U.K. 1,440,219. These patents are hereby incorporated herein by reference for relevant disclosures contained therein.

Described within these references are procedures wherein an alpha,beta unsaturated carboxylic reactant is reacted with a chlorinated hydrocarbon. Also described is a procedure where an olefinic material and an alpha,beta unsaturated carboxylic reactant are reacted in the presence of $Cl_2$. Another procedure described is an "ene" reaction wherein an olefinic compound and an alpha,beta- unsaturated compound are heated together to effect reaction. Another composition described in several of the foregoing patent publications is the reaction product of an olefin with an omega-oxo alkanoic acid.

As indicated in the above-mentioned patents, which are hereby incorporated by reference for their disclosure of compounds useful as component (D) of this invention, the carboxylic acids (or various derivatives thereof) include those derived by the reaction of an alpha,beta-unsaturated carboxylic acid containing compound or with an omega-oxo alkanoic acid with a polyalkene or halogenated derivative thereof or a suitable olefin.

The polyalkenes from which (D) may be derived are homopolymers and interpolymers of polymerizable olefin monomers of 2 to about 16 carbon atoms; usually 2 to about 6 carbon atoms. The interpolymers are those in which two or more olefin monomers are interpolymerized according to well-known conventional procedures to form polyalkenes having units within their structure derived from each of said two or more olefin monomers. Thus, "interpolymer (s)" as used herein is inclusive of copolymers, terpolymers, tetrapolymers, and the like. As will be apparent to those of ordinary skill in the art, the polyalkenes from which the substituent groups are derived are often conventionally referred to as "polyolefin(s)".

The olefin monomers from which the polyalkenes are derived are polymerizable olefin monomers characterized by the presence of one or more ethylenically unsaturated groups (i.e., >C=C<); that is, they are monoolefinic monomers such as ethylene, propylene, butene-1, isobutene, and octene- 1 or polyolefinic monomers (usually diolefinic monomers) such as butadiene-1,3 and isoprene.

These olefin monomers are usually polymerizable terminal olefins; that is, olefins characterized by the presence in their structure of the group >C=CH2. However, polymerizable internal olefin monomers (sometimes referred to in the literature as medial olefins) characterized by the presence within their structure of the group

-C-C=C-C-

can also be used to form the polyalkenes. When internal olefin monomers are employed, they normally will be employed with terminal olefins to produce polyalkenes which are interpolymers. For purposes of this invention, when a particular polymerized olefin monomer can be classified as both a terminal olefin and an internal olefin, it will be deemed to be a terminal olefin. Thus, 1,3-pentadiene (i.e., piperylene) is deemed to be a terminal olefin for purposes of this invention.

Preferred carboxylic acids include polyolefin substituted succinic acids, succinic anhydrides. ester acids or lactone acids. Other useful materials are the reaction products of any of the aforementioned olefinic compounds, other than the olefinically unsaturated hydrocarbon polymers identified as reactant (A) in this invention with any of the carboxylic reactants identified as reactant (B) of this invention.

In another preferred embodiment, the acid, lactone, anhydride, or ester (D) may contain from about 8 to 28 carbon atoms. When these are aliphatic, preferably predominantly linear, they tend to provide friction reducing characteristics to lubricating oils comprising the dispersant-viscosity improvers of this invention which incorporate such therein.

Particularly useful acids are hydrocarbyloxypolyalkyleneoxycarboxylic acids. Some non-limiting examples of the hydrocarbyloxypolyalkyleneoxycarboxylic acids include: isostearyl-O-$(CH_2CH_2O)_5CH_2CO_2H$; lauryl-O-$(CH_2CH_2O)_{2.5}$-$CH_2CO_2H$; lauryl-O-$(CH_2CH_2O)_{3.3}CH_2CO_2H$; oleyl-O-$(CH_2CH_2O)_4$-$CH_2CO_2H$; lauryl-O-$(CH_2CH_2O)_{4.5}CH_2CO_2H$; lau-

ryl-O-$(C_3H_6O)_x(CH_2CH_2O)_yCH_2CO_2H$, wherein x = 2-3 and y = 1-2, lauryl-O-$(CH_2CH_2O)_{10}$-$CH_2CO_2H$ lauryl-O $(CH_2CH_2O)_{16}$-$CH_2CO_2H$; octylphenyl-O-$(CH_2CH_2O)_8CH_2CO_2H$; octylphenyl-O-$(CH_2CH_2O)_{19}CH_2$-$CO_2H$; and 2-octadecanyl-O-$(CH_2CH_2O)_6CH_2CO_2H$. In one embodiment, the hydrocarbyloxypolyalkyleneoxycarboxylic acid is stearyl pentaethyleneglycolacetic acid, preferably it is isostearylpentaethyleneglycolacetic acid. Some of these acids are available commercially from Sandoz Chemical under the tradename Sandopan Acids.

Other similar polyoxyalkylene carboxylic acids that have methoxy terminal groups, such as 3,6,9-trioxa-decanoic acid are marketed by Hoechst Chemie.

Other acids useful as (c) are aromatic acids such as benzoic, salicylic, hydroxynaphthoic and heterocyclic acids, for example, pyridine dicarboxylic acid.

Non-limiting examples of carboxylic compounds (c) include those in the following examples. Parts in the following examples are, unless otherwise indicated, parts by weight. Temperatures are in degrees Celsius (°C). Filtrations employ a diatomaceous earth filter aid.

Example D-1

A mixture of 6400 parts (4 moles) of a polybutene comprising predominantly isobutene units and having a number average molecular weight of about 1600 and 408 parts (4.16 moles) of maleic anhydride is heated at 225-240°C for 4 hours. It is then cooled to 170°C and an additional 102 parts (1.04 moles) of maleic anhydride is added, followed by 70 parts (0.99 mole) of chlorine; the latter is added over 3 hours at 170-215°C. The mixture is heated for an additional 3 hours at 215°C then vacuum stripped at 220°C and filtered through diatomaceous earth. The product is the desired polybutenyl-substituted succinic anhydride having a saponification number of 61.8.

Example D-2

A polybutenyl succinic anhydride is prepared by the reaction of a chlorinated polybutylene with maleic anhydride at 200°C. The polybutenyl radical has a number average molecular weight of 805 and contains primarily isobutene units. The resulting alkenyl succinic anhydride is found to have an acid number of 113 (corresponding to an equivalent weight of 500).

Example D-3

A lactone acid is prepared by reacting 2 equivalents of a polyolefin ($\overline{M}_n$ about 900) substituted succinic anhydride with 1.02 equivalents of water at a temperature of about 90°C in the presence of a catalytic amount of concentrated sulfuric acid. Following completion of the reaction. the sulfuric acid catalyst is neutralized with sodium carbonate and the reaction mixture is filtered.

Example D-4

An ester acid is prepared by reacting 2 equivalents of an alkyl substituted succinic anhydride having an average of about 35 carbon atoms in the alkyl group with 1 mole of ethanol.

Example D-5

A reactor is charged with 1000 parts of polybutene having a number average molecular weight determined by vapor phase osmometry of about 950 and which consists primarily of isobutene units, followed by the addition of 108 parts of maleic anhydride. The mixture is heated to 110°C followed by the sub-surface addition of 100 parts $Cl_2$ over 6.5 hours at a temperature ranging from 110 to 188°C. The exothermic reaction is controlled as not to exceed 188°C. The batch is blown with nitrogen then stored.

Example D-6

A procedure similar to that of Example D-5 is repeated employing 1000 parts of polybutene having a molecular weight determined by vapor phase osmometry of about 1650 and consisting primarily of isobutene units and 106 parts maleic anhydride. $Cl_2$ is added beginning at 130°C and added at a nearly continuous rate such that the maximum temperature of 188°C is reached near the end of chlorination. The residue is blown with nitrogen and collected.

Example D-7

A reactor is charged with 1000 parts of $C_{18-24}$ olefin mixture obtained from Albamarle Corporation, Houston, Texas. The material is heated to 65° followed by addition of 350 parts maleic anhydride. The temperature is increased to 213° then held at reflux until the total acid number is between 285-295. The reactor contents are stripped to remove volatile materials until analysis shows % maleic acid is less than 0.30%

Example D-8

A reactor is charged with 1000 parts of a polybutene having a number average molecular weight of about 1500 and 47.9 parts molten maleic anhydride. The materials are heated to 138°C followed by chlorination, allowing the temperature to rise to between 188-191°C, heating and chlorinating until the acid number is between 43 and 49 (about 40-45 parts $Cl_2$ are utilized). The materials are heated at 224-227°C for about 2.5 hours until the acid number stabilizes. The reaction product is diluted with 438 parts mineral oil diluent and filtered with a diatomaceous earth filter aid.

Example D-9

A reactor is charged with 300 parts polyisobutylene having a number average molecular weight of about 1000 and containing about 50 mole % of terminal vinylidene groups, 89 part 50% aqueous glyoxylic acid and 1 part sulfuric acid. The materials are heated to 100°C and are held at 100°C for 1.5 hours while removing water under a slow $N_2$ purge. The materials are then heated to 125°C and held at 125°C for 2 hours, then to 150°C and held at 150°C for 3 hours while continuing to remove water under a slow $N_2$ purge. At this point the materials contain by analysis (TLC-FID) 7.0 % unreacted polyisobutylene. The materials are reheated to 110°C and filtered through a diatomaceous earth filter aid. The filtrate has saponification no. = 71 and total acid no. = 27.1.

The dispersant-viscosity improvers of this invention may be prepared in several different ways. In each embodiment, (A) and (B) are reacted first to form an intermediate.

In one typical embodiment, the intermediate so formed is reacted with (C). If (D) is also employed, the product of the reaction of the intermediate with (C) is then reacted with (D). Alternatively, the intermediate formed by reaction of (A) and (B) may be combined with (D) to form a mixture. Said mixture may then be reacted with (C).In still another embodiment, (C) and (D) may be added simultaneously to the intermediate formed from (A) and (B). However, the order of addition is not critical, being determined by preferred processing conditions and available equipment. Thus, for example, the intermediate formed by reaction with (A) and (B) may be added to a reactor containing (C), or (C) may be added to a reactor containing the intermediate from (A) and (B). Likewise, (D) if used, may be added in any order, although it is usually employed as a post-treating reagent after the intermediate from (A) and (B) is reacted with (C) or is combined with the intermediate from (A) and) (B), said mixture being reacted with (C).

As noted above, (C) may comprise an acylated polyamine. Such a material includes a preformed product prepared reacting a polyamine with (D) such that the resulting material contains at least one N-H group.

The reaction with the (C) reactant to prepare the products of this invention is conducted at temperatures ranging from about 25°C to about 230°C. When the amine is an alkanolamine. an alkylene polyamine or a thioalkanol amine, N-containing heterocyclic group containing products such as imidazoline, oxazoline, or thiazoline formation may occur. These are frequently obtained by first preparing an amide then continuing the reaction at elevated temperature to generate imidazoline, thiazoline or oxazoline by removal of water.

Imidazoline formation will not occur with every amine: the amine must have the structural element:

$$H_2NCRCR\text{-}NH\text{-}R^f .$$

Similarly, oxazoline formation can take place when the amine is a β-hydroxyethyl amine. e.g.,

$$HO\text{-}CR^f_2CR^f_2\text{-}NH_2$$

β-Thiolamines can react to form thiazolines.

In the above formulae, each $R^f$ is independently H, alkoxyalkyl, hydroxyalkyl, hydrocarbyl, aminohydrocarbyl or N-alkoxyalkyl- or hydroxyalkyl- substituted amino hydrocarbyl.

Thus, if imidazoline, thiazoline or oxazoline formation is not desired, they may be avoided by employing amine reactants that do not provide the opportunity for imidazoline, thiazoline or oxazoline formation, or, if the amine employed can lead to oxazoline, thiazoline or imidazoline, to minimize formation thereof by conducting the reaction at the lowest

temperature to prepare amide at an acceptable rate and in acceptable amounts, or to avoid prolonged heating of the amide-containing product, once it has formed. Infrared analysis during the reaction is a convenient means for determining the nature and extent of the reaction.

The first step of the process of this invention comprises reacting (A) and (B), optionally in the presence of an acidic catalyst, and is conducted at temperatures ranging from ambient up to the lowest decomposition temperature of any of the reactants, usually from about 60°C to about 250°C, more often from about 100°C to about 180°C, preferably up to about 160°C. The process employs from about 0.1 to about 4 moles (B) per mole of olefinic double bonds in (A), often from about 0.8 moles to about 1.2 moles (B) per mole of olefinic double bonds in (A), more often from about 0.95 moles to about 1.05 moles (B) per mole of olefinic double bonds in (A). The product formed in this first step is then reacted, at temperatures ranging from about 25°C to about 230°C, preferably from about 60°C to about 150°C, more often from about 100°C to about 11 0°C with (C) ammonia, a hydrazine or an amine characterized by the presence within its structure of at least one N-H group. It is generally preferred to utilize sufficient amine reactant (C) to convert substantially all of the intermediate arising from reaction of (A) with (B) to product; however, conversion of at least about 30%, often at least 50%, more preferably 75% is often acceptable. A stoichiometric excess of (C) may be used, generating a product containing unreacted N-H groups. Reactant (C) is used in amounts ranging from about 0.1 equivalents. often from about 0.5 equivalents up to about 2 moles, per mole of (B).

Products obtained by post-treating the acylated nitrogen compounds of this invention are also useful. Reagents such as urea, thiourea, carbon disulfide, aldehydes, ketones, lactones, carboxylic acids, hydrocarbon substituted succinic anhydrides, thiadiazoles, nitriles, epoxides, boron compounds, phosphorus compounds and the like are useful post-treating agents.

The process may be conducted in the presence of a diluent, usually an oil of lubricating viscosity. Other diluents may be used; particularly if it is desired to remove the diluent before further use of the product. Such other diluents include relatively low boiling point liquids such as hydrocarbon solvents and the like. The process may be conducted in a kettle type reactor. Under these conditions, it is frequently advantageous to utilize a diluent to improve processing. Alternatively, other reactors may be used. In one particular embodiment, the reactor is an extruder. Usually, processing in an extruder does not require the use of a diluent, although a diluent may be used if desired.

As noted hereinabove, the hydrocarbon polymer may be subjected to hydrogenation to reduce the number of double bonds that are present. When this is done, it is frequently done before reaction with the carboxylic reactant. However, alternatively, a hydrocarbon polymer containing more than the desired number of olefinic bonds may be first reacted with the carboxylic reagent, consuming a portion of the olefinic bonds, then the adduct may be subjected to hydrogenation to reduce the number of remaining, unreacted, double bonds.

The following examples are intended to illustrate several compositions of this invention as well as means for preparing same. Unless indicated otherwise all parts are parts by weight Any filtrations are conducted using a diatomaceous earth filter aid. Analytical values are obtained by actual analysis. It is to be understood that these examples are intended to illustrate several compositions and procedures of the invention and are not intended to limit the scope of the invention.

Example 1

Part A

A reactor equipped with a stirrer, $N_2$ inlet, and thermocouple is charged with 5950 parts of a 100N mineral oil (Petro-Canada) followed by heating, under $N_2$, to 160°C. To the heated oil 1050 parts of an ethylene-propylene-dicyclopentadiene copolymer having about 51 mole % ethylene groups and 2 mole % dicyclopentadiene groups, and having an equivalent weight of about 4,000 per carbon to carbon double bond, is added, over 3 hours while maintaining 160°C and $N_2$, then mixed for about 12 hours at 160°C with $N_2$. Another reactor equipped with a stirrer, thermocouple, and Dean-Stark trap fitted with a condenser and $N_2$ inlet is charged with 2800 parts of the polymer solution. The contents of the reactor are heated to 110°C whereupon 11.2 parts methyl glyoxylate methyl hemiacetal, 1.96 parts methanesulfonic acid and 2 drops of silicone antifoam are added followed by mixing and heating to 145°C over 0.75 hour and then heating at temperature for 6 hours. The materials are stripped at 145°C at 12-15 mm Hg for 1 hour.

Part B

A reactor equipped with a stirrer, reflux condenser, thermocouple, Dean-Stark trap and subsurface $N_2$ inlet is charged with 2808 parts of the product of Part A of this Example which is then heated to 145°C, under $N_2$, with stirring whereupon 294 parts of the product of Example C-18 are added over 2 minutes. The materials are heated to 165°C and held at temperature for 5 hours, then mixed with 1400 parts mineral oil (PetroCanada 100N), stirred for 0.2 hour and filtered.

Example 2

Part A

A reactor equipped with a stirrer, $N_2$ inlet, and thermocouple is charged with 300 parts of the ethylene-propylene-dicyclopentadiene copolymer in oil solution of Example 1 which is then heated, under $N_2$, to 90°C, whereupon are added 0.28 parts methyl glyoxylate methyl hemiacetal and 2 drops methane sulfonic acid. The temperature is increased to 130°C over 0.3 hour then to 135°C where the temperature is maintained for 4 hours with stirring.

Part B

A reactor is charged with 297 parts of the product of part A of this Example which is then heated to 140°C followed by charging to the heated material 0.33 part aminopropylmorpholine. The temperature is increased to 165°C over 2 hours under $N_2$, and is held there for 0.5 hour.

Example 3

The process of Example 1 is repeated replacing methyl glyoxylate methyl hemiacetal with an equivalent amount of 50% aqueous glyoxylic acid, removing water during the reaction.

Example 4

The process of Example 1 is repeated replacing glyoxylic acid with an equivalent amount of levulinic acid.

Example 5

Part A

A reactor equipped with a stirrer, $N_2$ inlet, and thermocouple is charged with 300 parts of the ethylene-propylene-dicyclopentadiene copolymer in oil solution of Example 1, 1.2 parts methyl glyoxylate methyl hemiacetal and 3 drops methane sulfonic acid. The materials are mixed and heated to 145°C, under $N_2$, for 3 hours. The materials are stripped at 15 mm Hg at 145°C for 1 hour.

Part B

A reactor is charged with 301 parts of the product of Part A of this Example which is then heated to 110°C under $N_2$. To the heated material are added 1.45 parts aminopropyl morpholine, the temperature is increased to 165°C and is held there for 3 hours. While maintaining 165°C the materials are vacuum stripped to 15 mm Hg.

Part C

A reactor is charged with 280 parts of the product of Part B of this Example which is heated to 165°C whereupon 140 parts mineral oil (PetroCanada 100N) are added. The materials are mixed then filtered.

Example 6

Part A

The procedure of Example 5 is repeated except 2.4 parts methyl glyoxylate methyl hemiacetal are used.

Part B

A reactor is charged with 302 parts of the product of Part A of this Example which is then heated to 110°C under $N_2$. To the heated material are added 2.92 parts aminopropyl morpholine, the temperature is increased to 165°C and is held there for 3 hours. While maintaining 165°C the materials are vacuum stripped to 15 mm Hg.

Part C

A reactor is charged with 280 parts of the product of Part B of this Example which is heated to 165°C whereupon 140 parts mineral oil (PetroCanada 100N) are added. The materials are mixed then filtered.

Example 7

Part A

A reactor equipped with a stirrer, $N_2$ inlet, and thermocouple is charged with 300 parts of the ethylene-propylene-dicyclopentadiene copolymer in oil solution of Example 1, Part A, and 1.2 parts methyl glyoxylate methyl hemiacetal which are mixed thoroughly. To this are added 0.21 part methane sulfonic acid and the materials are mixed. The materials are heated to 145°C then are held at temperature for 6 hours. The materials are stripped at 15 mm Hg at 145°C for 1 hour.

Part B

A reactor is charged with 300 parts of the product of Part A of this Example which is then heated to 145°C. To the heated material is added 1.02 part of dimethylaminopropyl amine followed by heating to 165°C under $N_2$. After 5 hours at 165°C, the materials are vacuum stripped at 165°C at 15 mm Hg for 0.2 hour then filtered. The residue is mixed with 150 parts PetroCanada 100N oil.

Example 8

Part A

The procedure of Example 7 is repeated except all ingredients are charged before mixing.

Part B

A reactor is charged with 300 parts of the product of Part A of this Example which is then heated, under $N_2$, to 145°C. To the heated material are added 31.5 parts of the product of Example C-18 whereupon the temperature is increased to 165°C and maintained there for 5 hours. The materials are vacuum stripped at 165°C at 15 mm Hg, the residue is filtered and the filtrate is mixed with 150 parts PetroCanada 100N oil.

Example 9

Part A

The procedure of Example 5 is repeated employing 700 parts of the polymer in oil solution of Example 1, 2.8 parts methyl glyoxylate methyl hemiacetal and 0.49 part methane sulfonic acid.

Part B

A reactor is charged with 703 parts of the product of Part A of this Example which is then heated, under $N_2$, to 130°C. To the heated material are added 73.5 parts of the product of Example C-18 whereupon the temperature is increased to 165°C and maintained there for 5 hours. The materials are mixed with 150 parts PetroCanada 100N oil, vacuum stripped at 165°C at 15 mm Hg, then the residue is filtered.

Example 10

Part A

The procedure of Example 1 is repeated except that after reaction and before stripping, the materials are mixed with an additional 200 parts of the 100N mineral oil.

Part B

A reactor is charged with 3013 parts of the product of Part A of this Example which is then heated, under $N_2$, to 145°C. To the heated material are added 294 parts of the product of Example C-18 whereupon the temperature is increased to 165°C and maintained there for 5 hours. The materials are mixed with 1200 parts PetroCanada 100N oil then filtered.

Example 11

Part A

A reactor equipped with a stirrer, $N_2$ inlet, and thermocouple is charged with 1500 parts of the ethylene-propylene-dicyclopentadiene copolymer in oil solution of Example 1 which is then heated, under $N_2$, to 130°C. To the heated oil solution are added 6 parts methyl glyoxylate methyl hemiacetal and 1.06 parts methane sulfonic acid, the temperature is increased to 145°C and is held there for 5 hours followed by stripping at 15 mm Hg and 145°C for 1 hour. Viscosity (ASTM D-445) @ 100°C = 3370 centistokes.

Part B

A reactor is charged with 200 parts of the product of Part A of this Example. The materials are heated, under $N_2$, to 130°C whereupon 0.144 part of an ethylene polyamine bottoms (HPA-X) is added and the temperature is raised to 165°C. The materials are then mixed for 5 hours at 165°C. Viscosity (ASTM D-445) @ 100°C = 5530 centistokes.

Example 12

A mixture of 300 parts of a product prepared substantially as in Part A of Example 1 and 1.08 part aminopropyl morpholine is heated to 165°C and maintained at temperature for 5 hours, all under $N_2$, mixed with 162 parts PetroCanada 100N oil, then filtered.

Example 13

A mixture of 300 parts of a product prepared substantially as in Part A of Example 1 and 75 parts of the product of Example C-18 is heated to 165°C and maintained at temperature for 5 hours, all under $N_2$, mixed with 162 parts PetroCanada 100N oil, then filtered.

Example 14

A reactor is charged with 2813 parts of a product prepared substantially as in Part A of Example 1 which is heated to 130°C followed by addition of 200 parts PetroCanada 100n oil, 630 parts of the product of Example C-18 and several drops of a silicone antifoam agent. The materials are heated to 165°C and are maintained at temperature for 5 hours. The materials are mixed with an additional 1200 parts of the oil and the solution is filtered.

Example 15

A mixture of 250 parts of a product prepared substantially as in Part A of Example 1 and 17.1 parts of the product of Example C-14 is heated to 165°C under $N_2$, heated at 165°C for 6 hours, mixed with 135 parts of PetroCanada 100N oil and filtered.

Example 16

A reactor is charged with 250 parts of a product prepared substantially as in Part A of Example 1 and 8.2 parts of the product prepared by reacting at 220-225°C 1 mole isostearic acid and 1.6 equivalents (one equivalent per N) of tetraethylene pentamine. The materials are reacted under $N_2$ at 165°C for 6 hours, mixed with 135 parts mineral oil and filtered.

Example 17

A reactor is charged with 300 parts of a product prepared substantially as in Part A of Example 1 and 9.5 parts of

a polyether (polyoxypropylene) primary amine (Huntsman Chemical). These are reacted for 32 hours at 165°C, mixed with 162 parts mineral oil and filtered.

Example 18

A reactor is charged with 300 parts of a product prepared substantially as in Part A of Example 1 and 9.33 parts of a polyether (polyoxyethylene-polyoxypropylene) primary amine (Jeffamine, Huntsman). These are reacted for 32 hours at 165°C, mixed with 162 parts mineral oil and filtered.

Example 19

Part A

A solution of 130 parts of a styrene-butadiene random block copolymer having molecular weight of about 200,000 and which has been hydrogenated to the extent of removing about 95% of its olefinic unsaturation, in 1170 parts PetroCanada 100N oil is prepared by mixing the two materials, under $N_2$, for 6 hours at 130°C.

Part B

A reactor is charged with 400 parts of the oil solution of Part A of this Example, 1.07 parts methyl glyoxylate methyl hemiacetal and 0.20 parts methane sulfonic acid. Under $N_2$ the materials are heated to 145°C and held there for 5 hours. After heating, the materials are vacuum stripped for 0.2 hour at 20 mm Hg.

Part C

A reactor is charged with 401 parts of the product of part B of this Example which is heated, under $N_2$ to 110°C. To this heated material is added 0.38 part of a polyamine identified as a high ethylene polyethylene amine (Delamine B.V). The materials are heated at 160°C for 8 hours then filtered.

Example 20

Part A

A reactor is charged with 400 parts of the oil solution of Part A of Example 19 and 1.07 parts methyl glyoxylate methyl hemiacetal. The materials are heated to 145°C and are held there, under $N_2$, for 5 hours. After heating, the materials are vacuum stripped at 20 mm Hg for 0.3 hour.

Part B

A reactor is charged with 401 parts of the product of Part A of this Example which is heated, under $N_2$ to 110°C. To this material is added 0.38 parts of the polyamine of Part C of Example 19, followed by heating at 160°C for 8 hours then filtration.

Example 21

Parts A-C

The procedures of Example 19 are repeated replacing the random block styrene-butadiene copolymer with a tapered block styrene-butadiene copolymer of essentially the same molecular weight and degree of hydrogenation.

Example 22

Parts A-C

The procedures of Example 19 are repeated replacing the random block styrene-butadiene copolymer with a butyl rubber identified as a copolymer of isobutylene (98.5 mole %) and isoprene (1.5 mole %) having a viscosity average molecular weight of 450,000 and mole % unsaturation of about 2%.

Example 23

Part A

Following substantially the procedure of Example 1, Parts A and B, a 15% in oil solution of an ethylene-propylene-cyclopentadiene copolymer as used in Example 1 but having $M_w$ about 25,000 lower is prepared. and 2800 parts of the oil solution is reacted with 11.2 parts methyl glyoxylate methyl hemiacetal.

Part B

A reactor is charged with 2811 parts of the oil solution of Part A, 200 parts mineral oil, the oil solution is heated to 145°C then 404 parts of a polyisobutylene ($\overline{M}_n \cong +1000$) substituted succinic anhydride prepared by the direct maleination of the polyisobutylene. is added over 0.2 hour. The materials are stirred for 0.25 hour then, under $N_2$, 52.3 parts of an ethyleneamine bottoms identified as HPA-X amines (Union Carbide) are added over 0.25 hour. The mixture is heated to 165°C and is held at temperature for 6 hours, collecting 7.5 parts distillate in a Dean-Stark trap. The materials are further diluted with 1502 parts mineral oil, mixed thoroughly then filtered at 145°C.

Example 24

A reactor is charged with 2810 parts of the product of Part A of Example 23 which is then heated to 145°C. Over 0.1 hour are added 3506 parts of a 50% oil solution of a polyisobutylene ($\overline{M}_n \cong 1700$) substituted succinic anhydride reacted with ethyleneamine bottoms identified as HPA-X amines (Union Carbide). The temperature is increased to 165°C and is held at temperature for 5 hours. An additional 1223 parts mineral oil is added and the materials are mixed for 0.2 hour then filtered at 150°C.

Example 25

Part A

A reactor is charged with 301 parts of the product of Part A of Example 5 which is then heated to 110°C under $N_2$. To the heated material are added 8.7 parts poly(oxyethylene-oxypropylene) diamine (Jeffamine ED-600. Huntsman), the temperature is increased to 165°C and is held there for 3 hours. While maintaining 165°C the materials are vacuum stripped to 15 mm Hg.

Part B

To 152 parts of the product of Part A of this Example are added 10 parts polyisobutenyl ($\overline{M}_n \cong 1000$) substituted succinic anhydride.

Example 26

Part A

A reactor is charged with 1000 parts of the oil solution of Part A of Example 1 and 100 parts of a polyisobutylene having about 70% terminal vinylidene groups. The materials are mixed and heated to 110°C whereupon 5 parts of methyl glyoxylate, methyl hemiacetal and 0.6 parts methanesulfonic acid are added. The materials are reacted at 160°C, under $N_2$, for 6 hours then stripped at 145°C and 13 mm Hg for 1 hour.

Part B

To another reactor are charged 2000 parts of the product of Part A of this Example and 5 parts triethylenetetramine which are then heated for 4 hours at 165°C.

Example 27

The procedure of Part B of Example 1 is repeated replacing the 294 parts of the product of Example C-18 with 525 parts of the product of Example C-28.

Example 28

Part A

An ethylene-propylene-dicyclopentadiene (63 : 37 : 1.5) weight copolymer (Uniroyal) is dissolved in PetroCanada 100N oil to prepare a solution containing 14% by weight copolymer. Following substantially the procedure of Example 1, 700 parts of the oil solution are reacted with 2.61 parts methyl glyoxylate methyl hemiacetal in the presence of 0.25 parts methane sulfonic acid. The theoretical saponification no. = 1.75.

Part B

A reactor is charged with 703 parts of the product of Part A of this example which is heated, under $N_2$, to 145°C whereupon 0.91 parts of polyamine bottoms (HPA-X) is added followed by heating to 165°C. The materials are heated for 5 hours at 165°C, then collected.

Example 29

Part A

The procedure of Example 28, Part A is repeated employing 0.5 parts methane sulfonic acid.

Part B

The procedure of Example 28, Part B is repeated replacing the product of Part A of that example with the product of Part A of this example.

Example 30

Part A

The procedure of Example 28, Part A is followed except the polymer in oil solution further contains 0.1% by weight 2,6-di-t-butyl-p-cresol.

Part B

A reactor is charged with 703 parts of the product of Part A of this example which is then heated to 145°C under $N_2$, whereupon 1.37 parts of HPA-X polyamine bottoms are added. The temperature is increased to 165°C and is maintained for 6 hours, then the materials are collected.

Example 31

Part A

The procedure of Example 29, Part A is repeated employing the polymer in oil solution of Example 30.

Part B

The procedure of Example 29, Part B is repeated replacing the produjct of Part A of that example with the product of Part A of this example.

Example 32

Part A

The procedure of Example 30, Part A is repeated using 2.1 parts methyl glyoxylate methyl hemiacetal.

Part B

A reactor containing 703 parts of the product of Part A of this example is heated to 145°C under $N_2$, whereupon 94.5 parts of the succinic anhydride-ethylene polyamine reaction product described in Example 32 are added, then the temperature is increased to 165°C and is maintained for 5 hours. The materials are cooled, then collected.

Example 33

Part A

The procedure of Example 28 is repeated with 575 parts of the copolymer in oil solution, 1.606 parts methyl glyoxylate methyl hemiacetal and 0.3836 parts methane sulfonic acid. To reduce foaming, 0.0485 parts of a kerosene solution of a silicone antifoam agent is employed.

Part B

A reactor is charged with 500 parts of the product of Part A of this example, followed by heating to 146°C. To the heated materials are added 0.72 parts HPA-X polyamine bottoms followed by heating, under $N_2$, to 165°C over 1 hour, then maintaining temperature for 6 hours. The materials are diluted with 196 parts Petro Canada 100N oil, reheated to 150°C and are held at temperature for 1 hour, then filtered.

Example 34

A reactor is charged with 302 parts of the product of Part A of Example 31 which is heated to 130°C, whereupon 0.43 part HPA-X polyamine is added. The temperature is increased to 165°C under $N_2$, and maintained for 5 hours.

Example 35

Part A

Following essentially the procedure of Example 1, an oil solution is prepared from 15 parts of an ethylene-propylene-ethylidene norbornene copolymer having an ethylene-propylene weight ratio of about 52 : 48 and containing about 4 weight % of groups derived from ethylidene norbornene, weight average molecular weight of about 180,000 (polystyrene standard) and equivalent weight based on C=C of about 23,000, and 85 parts of 100 neutral mineral oil.

Part B

A reactor is charged witih 800 parts of the oil solution of Part A of this example. The solution is heated, under $N_2$, to 120°C whereupon 4.2 parts glyoxylic acid methyl ester, methyl hemiacetal are added followed by heating to 145°C. The temperature is maintained for 6 hours, then the batch is vacuum stripped (145°C/15 mm Hg).

Example 36

The procedure of Example 26, Part B is repeated employing 4 drops of methane sulfonic acid during the reaction.

Example 37

The procedure of Example 27 is repeated employing 2,000 parts of the polymer in oil solution, 10.4 parts of GMHA and 10 drops methane sulfonic acid.

Example 38

To a reactor containing 704 parts of the product of Example 36 which has been heated to 145°C is added 0.59 part of triethylene tetramine. The batch is heated, under $N_2$, to 165°C and is held there for 5 hours.

Example 39

The procedure of Example 38 is repeated employing the product of Example 35, Part B.

Example 40

To a reactor containing 500 parts of the product of Example 37 which has been heated to 145°C are added 1.46 parts dimethylaminopropyl amine. The batch is heated to 165°C and is held there for 6 hours, then is stripped at 165°C/ 15 mm Hg for 1 hour.

Example 41

The procedure of Example 40 is repeated replacing the dimethylaminopropyl amine with 1.81 parts aminoethylpiperazine.

Example 42

A reactor is charged with 800 parts of a product prepared essentially as in Example 23, Part A. The materials are heated to 130°C under $N_2$ whereupon 1.63 parts ethanolamine are added. Heating under $N_2$ is continued to 160°C and the temperature is maintained for 6 hours. The materials are vacuum stripped for 1 hour at 20 mm Hg/160°C. The residue is diluted with 400 parts mineral oil (PetroCanada 100N).

Example 43

The procedure of Example 42 is repeated replacing the ethanolamine with 3.45 parts dibutylamine.

Example 44

The procedure of Example 42 is repeated replacing the ethanolamine with 3.45 parts N-(2-aminoethyl)piperazine.

Example 45

The proccedure of Example 42 is repeated replacing the ethanolamine with 3.85 parts aminopropylmorpholine.

Example 46

The procedure of Example 42 is repeated replacing the ethanolamine with 2.7parts dimethylaninopropylene.

Example 47

A reactor is charged witih 1,000 parts of a product prepared essentially as in Example 23A which is heated to 130°C whereupon 3.41 parts dimethylaminopropyl amine are added. The materials are heated to 160°C and are maintained at temperature for 6 hours, under $N_2$. The batch is stripped 1 hour at 160°C/15 mm Hg. The residue is collected.

Example 48

A reactor is charged with 800 parts of a product prepared essentially as in Example 23A which is then heated to 130°C, whereupon are added 1.08 parts HPA-X amine bottoms. Maintaining $N_2$ throughout, the materials are heated to 165°C and the temperature is maintained for 6 hours. After cooling the materials to 85°C, 8 parts of polyisobutene ($\overline{M}_n$ ~1,000) substituted succinic anhydride are added over 0.25 hour, the temperature is increased to 125°C and is maintained for 0.5 hour, whereupon 400 parts mineral oil (PetroCanada 100N) are added. The batch is mixed for 0.5 hour and then collected.

Example 49

The procedure of Example 48 is followed employing 800 parts of the product prepared as in Example 23A, 3 parts HPA-X, 26 parts of the succinic anhydride and 400 parts of PetroCanada 100N.

Example 50

A reactor is charged with 933 parts of a product prepared essentially as in Example 23A which is heated, under $N_2$, to 130°C. To the heated material are added 124 parts of a polyisobutene ($\overline{M}_n$ ~1,000) substituted succinic anhydride

- HPA-X polyamine bottoms reaction product. The batch is mixed for 5 hours at 160°C, 343 parts, PetroCanada 100N are added, the batch is mixed then filtered.

Example 51

A reactor is charged with 933 parts of a product prepared essentially as in Example 23A which is then heated, under $N_2$, to 130°C whereupon 1.85 parts HPA-X bottoms are added. The batch is heated to 160°C and the temperature is maintained for 5 hours, 465 parts PetroCanada 100N are added, then the batch is mixed and filtered.

Example 52

A reactor is charged with the product prepared essentially as in Example 23A, the material is heated to 120°C and 2.40 parts N-phenyl-1,4-phenylene diamine are added. The temperature is increased to 165°C and is maintained for 12 hours whereupon the materials are mixed with 200 parts PetroCanada 100N and filtered.

Example 53

The procedure of Example 52 is repeated replacing the 2.40 parts of amine with 2.80 parts of 2-methoxy-N-phenyl-1,4-phenylene diamine.

The Oil of Lubricating Viscosity

The lubricating compositions and methods of this invention employ an oil of lubricating viscosity, including natural or synthetic lubricating oils and mixtures thereof. Mixture of mineral oil and synthetic oils, particularly polyalphaolefin oils, ester and polyester oils, are often used.

Natural oils include animal oils and vegetable oils (e.g. castor oil, lard oil and other vegetable acid esters) as well as mineral lubricating oils such as liquid petroleum oils and solvent-treated or acid treated mineral lubricating oils of the paraffinic, naphthenic or mixed paraffinic-naphthenic types. Hydrotreated or hydrocracked oils are included within the scope of useful oils of lubricating viscosity.

Oils of lubricating viscosity derived from coal or shale are also useful. Synthetic lubricating oils include hydrocarbon oils and halosubstituted hydrocarbon oils such as polymerized and interpolymerized olefins, etc. and mixtures thereof, alkylbenzenes, polyphenyl, (e.g., biphenyls, terphenyls, alkylated polyphenyls, etc.), alkylated diphenyl ethers and alkylated diphenyl sulfides and their derivatives, analogs and homologues thereof and the like.

Alkylene oxide polymers and interpolymers and derivatives thereof, and those where terminal hydroxyl groups have been modified by esterification, etherification, etc., constitute other classes of known synthetic lubricating oils that can be used.

Another suitable class of synthetic lubricating oils that can be used comprises the esters of dicarboxylic acids and those made from $C_5$ to $C_{12}$ monocarboxylic acids and polyols or polyether polyols.

Other synthetic lubricating oils include liquid esters of phosphorus-containing acids, polymeric tetrahydrofurans, alkylated diphenyloxides and the like.

Hydrotreated naphthenic oils are well known.

Many viscosity improvers, and particularly functionalized dispersant viscosity improvers such as acylated polyolefins reacted with amines or alcohols are not readily compatible with certain types of oils of lubricating viscosity, notably polyolefin oils and hydrotreated oils. The dispersant viscosity improvers of this invention display outstanding compatibility with these oils.

Unrefined, refined and rerefined oils, either natural or synthetic (as well as mixtures of two or more of any of these) of the type disclosed hereinabove can used in the compositions of the present invention. Unrefined oils are those obtained directly from a natural or synthetic source without further purification treatment. Refined oils are similar to the unrefined oils except they have been further treated in one or more purification steps to improve one or more properties. Rerefined oils are obtained by processes similar to those used to obtain refined oils applied to refined oils which have been already used in service. Such rerefined oils often are additionally processed by techniques directed to removal of spent additives and oil breakdown products.

Specific examples of the above-described oils of lubricating viscosity are given in Chamberlin III, U.S. 4,326,972 and European Patent Publication 107,282, both of which are hereby incorporated by reference for relevant disclosures contained therein.

A basic, brief description of lubricant base oils appears in an article by D.V. Brock, "Lubrication Engineering", Volume 43, pages 184-5, March, 1987, which article is expressly incorporated by reference for relevant disclosures contained therein.

Other Additives

As mentioned, the compositions of this invention may contain minor amounts of other components. The use of such additives is optional and the presence thereof in the compositions of this invention will depend on the particular use and level of performance required. The compositions may comprise a zinc salt of a dithiophosphoric acid. Zinc salts of dithiophosphoric acids are often referred to as zinc dithiophosphates, zinc O,O-dihydrocarbyl dithiophosphates, and other commonly used names. They are sometimes referred to by the abbreviation ZDP. One or more zinc salts of dithiophosphoric acids may be present in a minor amount to provide additional extreme pressure, anti-wear and anti-oxidancy performance.

In addition to zinc salts of dithiophosphoric acids discussed hereinabove, other additives that may optionally be used in the lubricating oils of this invention include, for example, detergents, dispersants, viscosity improvers, oxidation inhibiting agents, metal passivating agents, pour point depressing agents, extreme pressure agents, anti-wear agents, color stabilizers and anti-foam agents. The above-mentioned dispersants and viscosity improvers are used in addition to the additives of this invention.

Auxiliary extreme pressure agents and corrosion and oxidation inhibiting agents which may be included in the compositions of the invention are exemplified by chlorinated aliphatic hydrocarbons, organic sulfides and polysulfides, phosphorus esters including dihydrocarbon and trihydrocarbon phosphites, molybdenum compounds, and the like.

Auxiliary viscosity improvers (also sometimes referred to as viscosity index improvers) may be included in the compositions of this invention. Viscosity improvers are usually polymers, including polyisobutenes, polymethacrylic acid esters, diene polymers, polyalkyl styrenes, alkenylarene-conjugated diene copolymers and polyolefins. Ethylene-higher olefin copolymers are especially useful supplemental viscosity improvers. Multifunctional viscosity improvers, other than those of the present invention, which also have dispersant and/or antioxidancy properties are known and may optionally be used in addition to the products of this invention. Such products are described in numerous publications including those mentioned in the Background of the Invention. Each of these publications is hereby expressly incorporated by reference.

Pour point depressants are a particularly useful type of additive often included in the lubricating oils described herein. See for example, page 8 of 'Lubricant Additives" by C.V. Smalheer and R. Kennedy Smith (Lezius-Hiles Company Publisher, Cleveland, Ohio, 1967). Pour point depressants useful for the purpose of this invention, techniques for their preparation and their use are described in U. S. Patent numbers 2,387,501; 2,015,748; 2,655,479; 1,815,022, 2,191,498; 2,666,748; 2,721,877; 2,721,878; and 3,250,715 which are expressly incorporated by reference for their relevant disclosures.

Anti-foam agents used to reduce or prevent the formation of stable foam include silicones or organic polymers. Examples of these and additional anti-foam compositions are described in "Foam Control Agents", by Henry T. Kemer (Noyes Data Corporation, 1976), pages 125-162.

Detergents and dispersants may be of the ash-producing or ashless type. The ash-producing detergents are exemplified by oil soluble neutral and basic salts of alkali or alkaline earth metals with sulfonic acids, carboxylic acids, phenols or organic phosphorus acids characterized by at least one direct carbon-to-phosphorus linkage.

The term "basic salt" is used to designate metal salts wherein the metal is present in stoichiometrically larger amounts than the organic acid radical. The extent of "overbasing" is indicated by the term metal ratio (MR) which indicates the number of equivalents of metal per equivalent of acid. Basic salts and techniques for preparing and using them are well known to those skilled in the art and need not be discussed in detail here.

Ashless detergents and dispersants are so-called despite the fact that, depending on its constitution, the detergent or dispersant may upon combustion yield a nonvolatile residue such as boric oxide or phosphorus pentoxide; however, it does not ordinarily contain metal and therefore does not yield a metal-containing ash on combustion. Many types are known in the art, and any of them are suitable for use in the lubricants of this invention. The following are illustrative:

(1) Reaction products of carboxylic acids (or derivatives thereof) containing at least about 34 and preferably at least about 54 carbon atoms with nitrogen containing compounds such as amine, organic hydroxy compounds such as phenols and alcohols, and/or basic inorganic materials. Examples of these "carboxylic dispersants" are described in British Patent number 1,306,529, and in many other U.S. patents including the following:

| | | |
|---|---|---|
| 3,163,603 | 3,381,022 | 3,542,680 |
| 3,184,474 | 3,399,141 | 3,567,637 |
| 3,215,707 | 3,415,750 | 3,574,101 |
| 3,219,666 | 3,433,744 | 3,576,743 |
| 3,271,310 | 3,444,170 | 3,630,904 |
| 3,272,746 | 3,448,048 | 3,632,510 |

(continued)

| | | |
|---|---|---|
| 3,281,357 | 3,448,049 | 3,632,511 |
| 3,306,908 | 3,451,933 | 3,697,428 |
| 3,311,558 | 3,454,607 | 3,725,441 |
| 3,316,177 | 3,467,668 | 4,194,886 |
| 3,340,281 | 3,501,405 | 4,234,435 |
| 3,341,542 | 3,522,179 | 4,491,527 |
| 3,346,493 | 3,541,012 | RE 26,433 |
| 3,351,552 | 3,541,678 | |

(2) Reaction products of relatively high molecular weight aliphatic or alicyclic halides with amines, preferably polyalkylene polyamines. These may be characterized as "amine dispersants" and examples thereof are described for example, in the following U.S. patents:

| | |
|---|---|
| 3,275,554 | 3,454,555 |
| 3,438,757 | 3,565,804 |

(3) Reaction products of alkyl phenols in which the alkyl groups contains at least about 30 carbon atoms with aldehydes (especially formaldehyde) and amines (especially polyalkylene polyamines), which may be characterized as "Mannich dispersants". The materials described in the following U. S. patents are illustrative:

| | |
|---|---|
| 3,413,347 | 3.725,480 |
| 3,697,574 | 3,726,882 |
| 3,725,277 | |

(4) Products obtained by post-treating the carboxylic amine or Mannich dispersants with such reagents are urea, thiourea, carbon disulfide, aldehydes, ketones, carboxylic acids, hydrocarbon-substituted succinic anhydrides, nitriles, epoxides, boron compounds, phosphorus compounds or the like. Exemplary materials of this kind are described in the following U.S. patents:

| | | | |
|---|---|---|---|
| 3,036,003 | 3,282,955 | 3,493,520 | 3,639,242 |
| 3,087,936 | 3,312,619 | 3,502,677 | 3,649,229 |
| 3,200,107 | 3,366,569 | 3,513,093 | 3,649,659 |
| 3,216,936 | 3,367,943 | 3,533,945 | 3,658,836 |
| 3,254,025 | 3,373,111 | 3,539,633 | 3,697,574 |
| 3,256,185 | 3,403,102 | 3,573,010 | 3,702,757 |
| 3,278,550 | 3,442,808 | 3,579,450 | 3,703,536 |
| 3,280,234 | 3,455,831 | 3,591,598 | 3,704,308 |
| 3,281,428 | 3,455,832 | 3,600,372 | 3,708,522 |
| | | | 4,234,435 |

(5) Interpolymers of oil-solubilizing monomers such as decyl methacrylate, vinyl decyl ether and high molecular weight olefins with monomers containing polar substituents, e.g., aminoalkyl acrylates or methacrylates, acrylamides and poly-(oxyethylene)-substituted acrylates. These may be characterized as "polymeric dispersants" and examples thereof are disclosed in the following U.S. patents:

| | |
|---|---|
| 3,329,658 | 3,666,730 |
| 3,449,250 | 3,687,849 |
| 3,519,565 | 3,702,300 |

The above-noted patents are incorporated by reference herein for their disclosures of ashless dispersants.

The above-illustrated additives may each be present in lubricating compositions at a concentration of as little as 0.001% by weight usually ranging from about 0.01% to about 20% by weight, more often from about 1% to about 12%

by weight.. In most instances, they each contribute from about 0.1% to about 10% by weight.

Lubricating Oil Compositions

The lubricating oil compositions of this invention comprise a major amount by weight of an oil of lubricating viscosity and a minor amount by weight of a composition of this invention. By major amount is meant more than 50% by weight, for example 51%, 60%, 90%, 99%, etc. By minor amount is meant less than 50% by weight, for example 1%, 15%, 39%, 49%, etc. The oil of lubricating viscosity is described above.

The compositions of the present invention are present in minor amounts, often amounts ranging from about 1% to about 29% by weight, more often from about 3% to about 10% by weight, even more often from about 5% to about 8% by weight.

Additive Concentrates

The various additives described herein can be added directly to the lubricant. Preferably, however, they are diluted with a substantially inert, normally liquid organic diluent such as mineral oil, naphtha, benzene, toluene or xylene, to form an additive concentrate. These concentrates usually comprise about 50% to about 99% by weight of the substantially inert, normally liquid organic diluent and about 50% to about 1% by weight of the compositions of this invention, and may contain, in addition, one or more other additives known in the art or described hereinabove. Concentrations such as 1%, 5%, 15% or 30%, up to about 50%, all by weight, may be employed.

The lubricating compositions of this invention are illustrated by the examples in the following Tables. The lubricating compositions are prepared by combining the specified ingredients, individually or from concentrates, in the indicated amounts and oil of lubricating viscosity to make the total 100 parts by weight. The amounts shown are indicated as parts by weight or parts by volume. Unless indicated otherwise, where components are indicated as parts by weight, they are amounts of chemical present on an oil-free basis. Thus, for example, an additive comprising 50% oil used at 10% by weight in a blend, provides 5% by weight of chemical. Where oil or other diluent content is given, it is for information purposes only and does not indicate that the amount shown in the table includes oil. Amounts of products of examples of this invention include oil content, if any.

Where percentages of components are on a volume basis, the examples indicate the amounts of diluent (if any) present in the component as percent by weight diluent.

These examples are presented for illustrative purposes only, and are not intended to limit the scope of this invention.

Examples I-XI

Lubricating oil compositions are prepared by blending into a mineral oil basestock (Exxon), 2.3 parts polybutene ($\overline{M}_n \cong 1300$) substituted succinic anhydride-ethylene polyamine reaction product, 0.9 parts Ca overbased (Metal ratio (MR) $\cong$ 1.1) S-coupled alkyl phenate, 0.25 parts di-(nonyl phenyl) amine, 0.5 parts Ca overbased (MR $\cong$ 1.2) alkyl benzene sulfonate, 0.4 parts Mg overbased (MR $\cong$ 14.7) alkyl benzene sulfonate, 0.007 parts of a silicone antifoam agent, 1.1 parts of zinc di-mixed (isopropyl-isooctyl) dithiophosphate, 0.6 parts Ca overbased (MR $\cong$ 2.3) S-coupled phenate, 1.15 parts of polybutene ($\overline{M}_n \cong 1000$) substituted succinic anhydride-pentaerythritol/ethylene polyamine reaction product, 0.3 parts of a polymethacrylate pour point depressant, and the indicated amounts of the listed products of this invention. Viscosities are determined employing the procedure set out in ASTM Standard D-445 and the viscosity index is determined employing the procedure set out in ASTM Standard D-2270. ASTM Procedure D-445 covers, in general, the determination of kinematic viscosity of liquid petroleum products by measuring the time for a volume of liquid to flow under gravity through a calibrated glass capillary viscometer. These are reported in terms of centistokes. ASTM Procedure D-2270 provides a means for calculating Viscosity Index.. Apparent viscosities are determined employing ASTM Procedure D-5293, Apparent Viscosities of Engine Oils Between -5 and -30°C Using the Cold-Cranking Simulator. All of these Procedures appear in the Annual Book of ASTM Standards, Section 5, Petroleum Products. Lubricants and Fossil Fuels, ASTM, 1916 Race Street, Philadelphia, PA, USA.

| Example | Prod. of Example (parts by wt.) | Kinematic Viscosity | | | Apparent Viscosity Centipose @ -15°C |
|---|---|---|---|---|---|
| | | 40°C | 100°C | VI | |
| 1 | 2-B (5.5) | 107.9 | 14.4 | 136 | 2,940 |
| II | 5-C (7.5) | 100.1 | 13.52 | 135 | 2,790 |
| III | 6-C (8.0 | 105.4 | 14.09 | 135 | 2,820 |
| IV | 7-B (8.0) | 102.8 | 13.75 | 134 | 2,830 |

(continued)

| Example | Prod. of Example (parts by wt.) | Kinematic Viscosity | | | Apparent Viscosity Centipose @ -15°C |
|---|---|---|---|---|---|
| | | 40°C | 100°C | VI | |
| V | 8-B (8.0) | 103.1 | 13.85 | 135 | 2,800 |
| VI | 13 (7.5) | 99.61 | 13.2 | 130 | 2,910 |
| VII | 14 (8.5) | 106.3 | 14.1 | 134 | --- |
| VIII | 15 (7.5) | 99.52 | 13.3 | 132 | 2,810 |
| IX | 16 (7.5) | 99.23 | 13.31 | 133 | 2,790 |
| X | 17 (7.5) | 96.48 | 12.93 | 131 | 2,770 |
| XI | 18 (7.5) | 96.43 | 12.96 | 132 | 2,770 |

Example XII

Lubricating oil compositions are prepared by blending into a mineral oil basestock (Exxon), 0.08 parts of styrene-maleate copolymer neutralized with an amine, 3.43 parts polybutene ($\overline{M}_n \cong 1300$) substituted succinic anhydride-ethylene polyamine reaction product, 0.55 parts Ca overbased (MR $\cong$ 1.1) S-coupled alkyl phenate, 0.25 parts di-(nonyl phenyl) amine, 0.5 parts Ca overbased (MR $\cong$ 1.2) alkyl benzene sulfonate, 0.34 parts Mg overbased (MR $\cong$ 14.7) alkyl benzene sulfonate, 1.40 parts Ca overbased (MR $\cong$ 2.8) alkyl benzene sulfonate, 0.001 parts of a silicone antifoam agent, 1.17 parts of zinc di-mixed (isopropyl-2-ethylhexyl) dithiophosphate, and 8.5 parts of the product of Example 14. Viscosity (ASTM D-445) @ 40°C = 112.47; @ 100°C = 15.08. Viscosity Index (ASTM D-2270) = 140. Apparent Viscosity (D-5293) @ -15°C = 2810.

Example XIII

A lubricating oil composition is prepared by blending into a mineral oil basestock (Exxon) 0.08 parts styrene-maleate copolymer neutralized with an amine, 2.56 parts of a polybutene ($\overline{M}_n \cong 1650$) substituted succinic anhydride-ethylene polyamine bottoms reaction product, 3.4 parts of a Ca overbased (MR 2.3) sulfurized alkyl phenol, 1.14 parts of Zn mixed isopropyl-methyl amyl dithiophosphate, 0.5 parts of sulfurized butadiene-butyl acrylate adduct, 0.35 parts Ca overbased (MR 20) alkyl benzene sulfonic acid, 1.06 parts Ca overbased (MR 2.8) alkyl benzene sulfonate, and 9.5 parts of the product of Example 14. Apparent Viscosity (-15°C) 3300.

Examples XIV - XVI

Lubricating oil compositions are prepared by blending into a mineral oil basestock (Exxon), 0.08 part styrene-maleate copolymer, neutralized with an amine, 1.05 parts Zn salt of mixed isopropyl-methyl dithiophosphate, 0.87 parts Ca overbased (MR ~ 2.3) sulfurized alkyl phenol, 0.7 part Ca overbased (MR 12) alkyl benzene sulfonate, 0.48 part Ca overbased (MR 2.8) alkyl benzene sulfonate, 0.48 part sulfurized butadiene-butyl acrylate Diels-Alder adduct, 0.03 part of a dimercapto thiadiazole derivative, 1.18 parts of polybutene (MR ~ 1,650) substituted succinic anhdryde-ethylene polyamine bottoms reaction product, 100 parts per million parts of lubricant of a kerosene solution of a silicone antifoam agent and the indicated amounts of the listed products of this invention: Viscosities and viscosity index are determined employing procedures described for Examples I-XI.

| Example | Product of Example (parts by wt.) | Kinematic Viscosity | | | Apparent Viscosity Centipose @ -15°C |
|---|---|---|---|---|---|
| | | 40° | 100°C | VI | |
| XIV | 38 (5.6) | 127.58 | 16.65 | 141 | 2,500 |
| XV | 40 (5.7) | 107.76 | 13.89 | 129 | 2,490 |
| XVI | 41(5.7) | 111.97 | 14.50 | 132 | 2,480 |
| XVII | 44(8.5) | 85.59 | 11.81 | 130 | 2,410 |
| XVIII | 45 (8.5) | 84.24 | 11.62 | 129 | 2,360 |
| XIX | 46 (8.5) | 85.59 | 11.81 | 130 | 2,370 |

Example XX

To the lubricating oil composition of Example XIV are added an additional 1.47 parts of the polyisobutene succinic anhydride-polyamine reaction produoct. Kinematic Viscosity @ 40°C = 150, @ 100°C = 19.34, VI = 147; Apparent Viscosity = 2950 centpoise.

Example XXI - XXII

Essentially duplicate lubricating oil compositions are prepared by blending into a mineral oil basestock 3.6 parts of a polyisobutene substituted succinic anhydride-ethylene polyamine bottoms reaction product, 1.05 parts of zinc salt of mixed isopropyl-methyl amyl dithiophosphate, 0.9 part of Ca overbased (MR ~ 2.3) sulfur coupled alkyl phenate, 0.03 part of a dimercapto thiadizole product, 0.7 part of Ca overbased (MR = 12) alkylbenzene sulfonate, 0.48 part of sulfurized butadiene-butyl acrylate Diels-Alder adduct, 0.48 part of Ca overbased (MR 2.8) alkyl benzene sulfonate, 100 parts per million parts lubricant of a kerosene solution of a silicone antifoam and 5.5 parts of the product of Example 35, The following data were generated:

| Lubricant | Kinematic Viscosity | | | Apparent Viscosity (Centipose) | |
|---|---|---|---|---|---|
| | 40° | 100°C | VI | | |
| XXI | 107.6 | 14.1 | 132 | @ -25°C:<br>@-20°C:<br>@-15°C: | 76,500<br>6,030<br>3,190 |
| XVII | | 14.3 | | @-15°C: | 3,160 |

Example XXIII

A lubricating oil as in Examples XVIII and XIX is prepared but including therein 2.7 parts of 100N oil (PetroCanada 100N). Apparent viscosity data are obtained:

| Temperature | Centipose |
|---|---|
| -15 | 3,090 |
| -20 | 5,730 |
| -25 | 54,300 |

Example XXIV

A lubricating oil composition is prepared by blending into a mineral oil basestock (Exxon) 3.55 parts of a polyisobutene (Mn ~ 1650) substituted succinic anhydride-polyethylene polyamine bottoms reaction product, 1.13 parts of a zinc salt of mixed isopropyl-methyl amyl dithiophosphate, 0.48 part of sulfurized butadiene-butyl acrylate Diels-Alder adduct, 0.03 part of a dimercapto thiadiazole derivative, 0.88 part of Ca overbased (MR ~ 2.3) sulfur coupled alkyl phenol, 0.72 part of Ca overbased (MR ~ 12) alkyl benzene sulfonic acid, 0.45 part Ca overbased (MR 2.8) alkyl benzene sulfonic acid, 100 parts per million parts lubricant of a kerosene solution of a silicone antifoam, 0.08 part of a styrene-maleate ester neutralized with an amine and 5.6 parts of the product of Example 35. The following viscosity data were observed:

| Temperature | Apparent Viscosity |
|---|---|
| -15 | 3,560 centipose |
| -20 | 6,780 centipose |
| -25 | 25,600 centipose |

Example XXV

A lubricating oil composition as in Example XXI is prepared replacing the product of Example 35 with 8.0 parts of the product of Example 50 and further 0.08 part of a styrene-maleate copolymer neutralized with an amine. Data are obtained as follows: Kinematic Viscosity: 40°C = 105.85, 100°C = 13.95; VI = 133; Apparent Viscosity: -15°C = 3,290,

-20°C = 6,460, -25°C = 24,600.

Examples XXVI - XXVIII

Lubricating oil compositions as in Example XXI are prepared replacing the product of Example 35 with the indicated amounts of the listed products and further 0.2 parts of a polymethacrylate pour point depressant. Data are obtained as shown:

| Example | Product of Example (parts by wt.) | Kinematic Viscosity | | | Apparent Viscosity Centipose @ T | |
|---|---|---|---|---|---|---|
| | | 40° | 100°C | VI | | |
| XXVI | 50 (8.5) | 110.56 | 14.59 | 135 | -15°C | 3,110 |
| | | | | | -20°C | 6,190 |
| XXVVII | 51(8.5) | 106.85 | 14.21 | 135 | -15°C | 2,960 |
| | | | | | -20°C | 5,860 |
| | | | | | -25°C | 21,400 |
| XXVIII | 51(8.0) | 110.18 | 14.42 | 133 | -15°C | 3,090 |
| XXIX | 51(8.5) | | | | -20°C | 6,240 |

Examples XXX - XXXI

Lubricating oil compositions are prepared by blending into a mineral oil basestock 0.2 parts of a polymethacrylate pour point depressant, 2.35 parts of a polyisbutylene ($\overline{M}_n \sim$ 1,650) substituted succinic anhydride-ethylene polyamine bottoms reaction product, 0.67 parts of a zinc salt of mixed isopropyl-methyl amyl dithiophosphate, 0.59 parts of Ca overbased (MR ~ 2.3) sulfur coupled alkyl phenol, 0.02 part of a dimercaptothiadiazole derivative, 0.46 part of Ca overbased (MR ~ 12) alkyl benzene sulfonate, 0.31 part of sulfurized butadiene-butyl acrylate Diels Alder adduct, 0.31 part of Ca overbased (MR 2.8) alkyl benzene sulfonate, 100 parts per million parts lubricant of a kerosene solution of a silicone antifoam, and the indicated amounts of the listed products of this invention. Data is obtained as shown:

| Example | Product of Example (parts by wt.) | Kinematic Viscosity | | | Apparent Viscosity Centipose @ T | |
|---|---|---|---|---|---|---|
| | | 40° | 100°C | VI | | |
| XXX | 50 (8.5) | 94.49 | 12.87 | 133 | -15°C | 2,610 |
| | | | | | -25°C | 18,700 |
| XXXI | 51(8.5) | 92.35 | 12.70 | 134 | -15°C | 2,470 |
| | | | | | -20°C | 4,820 |
| | | | | | -25°C | 17,900 |

While the invention has been explained in relation to its preferred embodiments, it is to be understood that various modifications thereof will become apparent to those skilled in the art upon reading the specification.

## Claims

**1.** A composition of matter comprising the reaction product of

(A) at least one olefinically unsaturated hydrocarbon polymer having $\overline{M}$ n of from about 20,000 to about 500,000, when the polymer is not a star polymer, and up to about GPC peak molecular weight of 4,000,000 when the polymer is a star polymer, with
(B) at least one carboxylic reactant selected from compounds of the formula

$$R^3C(O)(R^4)_nC(O)OR^5 \qquad (IV)$$

wherein each of $R^3$ and $R^5$ is independently H or a hydrocarbyl group, $R^4$ is a divalent hydrocarbylene group, and n is 0 or 1, and reactive sources thereof wherein (A) and (B) are first reacted to form an intermediate, then

reacting said intermediate with
(C) at least one of ammonia or a hydrazine or an amine characterized by the presence within its structure of at least one condensable H—N group and optionally,
(D) at least one of a hydrocarbyl substituted carboxylic acid, lactone, anhydride, and ester.

**2.** The composition of claim 1 wherein reactant (B) is at least one of glyoxylic acid, the hydrate thereof, and a compound of the formula

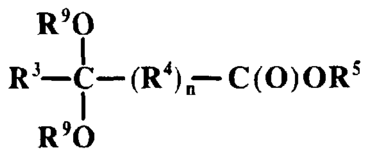

(V)

wherein each of $R^3$ and $R^5$ and each $R^9$ is independently H or a hydrocarbyl group, $R^4$ is a divalent hydrocarbylene group, and n is 0 or 1.

**3.** The composition of claim 1 wherein (B) is methyl glyoxylate methyl hemiacetal or a lower alkyl ester of glyoxylic acid.

**4.** The composition of any preceding claim wherein (A) the olefinically unsaturated polymer contains an average of from about 1 to about 9000 olefinic double bonds per molecule based on the $\overline{M}_n$ of the olefinically unsaturated polymer.

**5.** The composition of any preceding claim wherein (A) contains 1 olefinic double bond per every 20 to about 7,000 carbon atoms.

**6.** The composition of any preceding claim characterized by the presence within its structure of an average of about 0.1 to about 4 groups derived from (B) per mole of olefinic double bonds in (A).

**7.** The composition of any preceding claim wherein the olefinically unsaturated hydrocarbon polymer is at least one of:

(1) polymers of dienes;
(2) copolymers of conjugated dienes with vinyl substituted aromatic compounds;
(3) polymers of aliphatic olefins having from 2 to about 28 carbon atoms:
(4) olefin-diene copolymers; and
(5) star polymers.

**8.** The composition of claim 7 wherein the hydrocarbon polymer is (1) a polymer of dienes, wherein the diene comprises a conjugated diene selected from isoprene, butadiene, and piperylene.

**9.** The composition of claim 7 wherein the hydrocarbon polymer is (2) a copolymer of a conjugated diene with a vinyl substituted aromatic compound, wherein the vinyl substituted aromatic compound is a styrenic compound and the conjugated diene is selected from isoprene, butadiene, and piperylene.

**10.** The composition of claim 7 wherein the hydrocarbon polymer is (3) a polymer of alpha-olefins having from 2 to about 28 carbon atoms, wherein the aliphatic olefins comprise alpha-olefins.

**11.** The composition of claim 10 wherein the aliphatic olefin comprises a butene and the polymer comprises terminal ethenylidene or vinylidene olefinic double bonds.

**12.** The composition of claim 7 wherein the hydrocarbon polymer is (4) an olefin-diene copolymer wherein the olefin comprises ethylene and propylene and the diene is a non-conjugated diene.

**13.** The composition of claim 7 wherein the hydrocarbon polymer is a butyl rubber.

**14.** The composition of claim 7 wherein the hydrocarbon polymer is (5) a star polymer, wherein the $\overline{M}_n$ is from about 100,000 to about 2 million.

**15.** The composition of any preceding claim wherein the amine is a polyamine containing at least two basic nitrogen atoms and is characterized by the presence within its structure of at least one HN< group.

**16.** The composition of claim 15 wherein the polyamine is an alkylene polyamine conforming to the formula

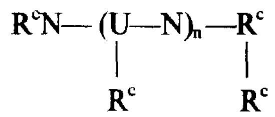

wherein n is from 1 to about 10, each U is independently hydrocarbylene, each $R^c$ is independently a hydrogen atom, a hydrocarbyl group, or a hydroxy-substituted or amine-substituted hydrocarbyl group, having up to about 30 atoms, or two $R^c$ groups on different nitrogen atoms can be joined together to form a U group, with the proviso that at least one $R^c$ group is hydrogen.

**17.** The composition of any one of claims 1 to 15 wherein the amine (C) comprises a condensation product obtained by reaction of at least one hydroxy compound with at least one polyamine reactant containing at least one primary or secondary amino group, said condensation products characterized as being a polyamine product having at least one condensable primary or secondary amino group, made by contacting at least one hydroxy-containing material (b-i) having the general formula

$$(R)_nY_z—X_p—A(OH)_q)_m \qquad (I)$$

wherein each R is independently H or a hydrocarbon based group, Y is selected from O, N, and S, X is a polyvalent hydrocarbon based group, A is a polyvalent hydrocarbon based group, n is 1 or 2, z is 0 or 1, p is 0 or 1, q is from 1 to about 10, and m is a number of from l to about 10; with (b-ii) at least one amine having at least one N-H group.

**18.** The composition of any preceding claim wherein the reactants comprise (D), the at least one of a hydrocarbyl substituted carboxylic acid, lactone, anhydride and ester.

**19.** A process comprising reacting, optionally in the presence of an acid catalyst, a mixture comprising

(A) an olefinically unsaturated hydrocarbon polymer having $\overline{M}_n$, of from about 20,000 to about 500,000 when the polymer is not a star polymer, and up to about GPC peak molecular weight of 4,000,000 when the polymer is a star polymer,
(B) with from about 0.1 to about 4 moles per mole of olefinic double bonds in (A) of at least one carboxylic reactant selected from compounds of the formula

$$R^3C(O)(R^4)_nC(O)OR^5 \qquad (IV)$$

wherein each of $R^3$ and $R^5$ is independently H or a hydrocarbyl group, $R^4$ is a divalent hydrocarbylene group, and n is 0 or 1, and reactive sources thereof wherein (A) and (B) are first reacted to form an intermediate, then reacting said intermediate with
(C) at least one of ammonia or a hydrazine or an amine characterized by the presence within its structure of at least one condensable H—N group and optionally,
(D) at least one of a hydrocarbyl substituted carboxylic acid, lactone, anhydride, and ester.

**20.** The process of claim 19 wherein (A) further comprises 1 equivalent carbon to carbon double bonds to about 2 moles of olefinically unsaturated polymer having $\overline{M}_n$ of from about 300 to less than 20,000 per mole of carbon to carbon double bonds in said olefinically unsaturated polymer having $\overline{M}$ of from about 20,000 to about 500,000.

**21.** The process of claim 19 or claim 20 wherein (B) is at least one of a glyoxylic acid, the hydrate thereof, a lower alkyl ester of glyoxylic acid and a lower alkyl glyoxylate, lower alkyl hemiacetal, and (A) the olefinically unsaturated hydrocarbon polymer is at least one of:

(1) polymers of dienes;
(2) copolymers of conjugated dienes with vinyl substituted aromatic compounds;
(3) polymers of aliphatic olefins having from 2 to about 28 carbon atoms;
(4) olefin-diene copolymers; and
(5) star polymers.

**22.** The process of any one of claims 19 to 21 conducted in an extruder.

**23.** The process of any one of claims 19 to 22 wherein the amine (C) is a polyamine.

**24.** The process of any one of claims 19 to 22 wherein the amine (C) comprises a condensation product obtained by reaction of at least one hydroxy compound with at least one polyamile reactant containing at least one primary or secondary amino group, said condensation products characterized as being a polyamine product having at least one condensable primary or secondary amino group, made by contacting at least one hydroxy-containing material (b-i) having the general formula

$$(R)_n Y_z — X_p — (A(OH)_q)_m \qquad (I)$$

wherein each R is independently H or a hydrocarbon based group, Y is selected from the group consisting of O, N, and S, X is a polyvalent hydrocarbon based group, A is a polyvalent hydrocarbon based group, n is 1 or 2, z is 0 or 1, p is 0 or 1, q ranges from 1 to about 10, and m is a number ranging from 1 to about 10; with (b-ii) at least one amine having at least one N-H group.

**25.** The process of any one of claims 19 to 22 wherein the amine (C) comprises at least one of a reaction product of a polyamine with a member ofthe group consisting of hydrocarbyl substituted carboxylic acid, lactone, anhydride, and ester wherein said reaction product contains at least one condensable N-H group.

**26.** A product prepared by the process of any one of claims 19 to 25.

**27.** An additive concentrate comprising from about 99% to about 50% by weight of a substantially inert organic diluent and from about 1% to about 50% by weight of the product of any one of claims 1-18 and 26.

**28.** A lubricating oil composition comprising a major amount of an oil of lubricating viscosity and a minor amount of a composition according to any one of claims 1-18 and 26.